# EUROPEAN PATENT APPLICATION

(11) **EP 4 757 385 A1**
(43) Date of publication of application: **10.06.2026**
(21) Application number: 24850945.7
(22) Date of filing: 02.08.2024
(51) Int. Cl.: H04W 24/02, H04W 24/10

(54) **QUALITY OF EXPERIENCE (QOE) CONFIGURATION METHOD AND APPARATUS, AND STORAGE MEDIUM**

(30) Priority: 04.08.2023 CN 202310981551
(71) Applicant: China United Network Communications Group Company Limited, Beijing 100033 (CN)
(72) Inventor: LI, Pei, Beijing 100033 (CN); LI, Fuchang, Beijing 100033 (CN)
(74) Representative: Danubia Patent & Law Office LLC
(86) International application number: PCT/CN2024/109624
(87) International publication number: WO 2025/031300

(57) **Abstract**

The present application relates to the technical field of communications, and discloses a quality of experience (QoE) configuration method and apparatus, and a storage medium, used for solving the problem that QoE measurement cannot be performed after cell handover of terminal devices in idle states. The method comprises: a terminal device acquires a QoE parameter set; and after the terminal device performs cell reselection in an idle state, the terminal device sends first information to a currently-accessed target access network device, wherein the first information comprises the QoE parameter set. The present application is applied to configuration of QoE measurement.

## Description

The present application claims priority to Chinese Patent Application No. CN202310981551.X, filed with the China National Intellectual Property Administration on August 4, 2023 and entitled "QUALITY OF EXPERIENCE (QOE) CONFIGURATION METHOD AND APPARATUS, AND STORAGE MEDIUM", which is incorporated herein by reference in its entirety.

### TECHNICAL FIELD

The present application relates to the field of communications, and in particular, to a quality of experience (QoE) configuration method and apparatus, and a storage medium.

### BACKGROUND

QoE measurement refers to the process in which a terminal device (user equipment, UE) measures performance parameters of the operator's network and transmits measurement results to the operator's equipment. After receiving the measurement results, the operator's equipment can perform network optimization based on the measurement results provided by the terminal device. In this way, the operator's network can provide a better usage experience for the terminal device.

In related art, during a QoE measurement, a source access network device transmits QoE measurement configuration information to the terminal device, and correspondingly, the terminal device receives the QoE measurement configuration information. The terminal device stores the QoE measurement configuration information and performs a QoE measurement according to the QoE measurement configuration information. However, in a case where the terminal device is in an idle state, the source access network device will delete the QoE measurement configuration information corresponding to the terminal device. Thus, after the UE re-accesses to a target access network device, the target access network device does not have saved QoE measurement configuration information corresponding to the terminal device. Consequently, when the terminal device in an idle state undergoes cell handover, the target access network device to which the new cell after the handover belongs will be unable to configure QoE measurement configuration information for the terminal device. As a result, the terminal device cannot perform the QoE measurement after the cell handover. Therefore, how to resolve the problem that a terminal device in the idle state cannot perform the QoE measurement after performing cell handover remains a technical problem to be solved.

### SUMMARY

The present application provides a quality of experience (QoE) configuration method and apparatus, and a storage medium, to resolve the problem that a terminal device in an idle state is unable to perform the QoE measurement after performing cell handover.

To achieve the above objective, the present application adopts the following technical solutions.

In a first aspect, the present application provides a QoE configuration method, which includes: a terminal device obtaining a QoE parameter set; and after the terminal device performs idle state cell reselection, the terminal device transmitting first information to a currently accessed target access network device, where the first information includes the QoE parameter set.

In a possible implementation, the first information is carried in a connection setup complete message.

In a possible implementation, the first information is carried in a first QoE measurement report, where the first QoE measurement report is a report generated by the terminal device by performing a QoE measurement based on first QoE measurement configuration parameter information transmitted by a source access network device, the source access network device being an access network device to which the terminal device established a connection before performing cell reselection, and the first QoE measurement configuration parameter information being generated based on the QoE parameter set.

In a possible implementation, the terminal device receives second information from the source access network device, where the source access network device is an access network device to which the terminal device established a connection before performing cell reselection; and the second information includes the QoE parameter set.

In a possible implementation, the second information is carried in the first QoE measurement configuration parameter information.

In a possible implementation, the second information is carried in connection release information.

In a possible implementation, both the first information and the second information further include a target QoE reference identity, and the target QoE reference identity is used to mark a QoE measurement to be performed in the terminal device.

In a possible implementation, the terminal device receives second QoE measurement configuration parameter information from the target access network device, where the second QoE measurement configuration parameter information includes a second QoE measurement configuration parameter; and the terminal device performs a QoE measurement based on the second QoE measurement configuration parameter.

In a second aspect, the present application provides another QoE configuration method, which includes: a target access network device receiving first information from a terminal device, where the first information includes a QoE parameter set; and the target access network device transmitting second QoE measurement configuration parameter information to the terminal device, where the second QoE measurement configuration parameter information is obtained based on the QoE parameter set.

In a possible implementation, the first information is carried in a connection setup complete message.

In a possible implementation, the first information is carried in a first QoE measurement report, where the first QoE measurement report is generated by performing a QoE measurement based on first QoE measurement configuration parameter information transmitted by a source access network device, the source access network device being an access network device to which the terminal device established a connection before performing cell reselection, and the first QoE measurement configuration parameter information being information generated by the target access network device based on the QoE parameter set.

In a possible implementation, the first information further includes a target QoE reference identity, where the target QoE reference identity is used to mark a QoE measurement to be performed in the terminal device.

In a possible implementation, the second QoE measurement configuration parameter information includes a second QoE measurement configuration parameter, where the second QoE measurement configuration parameter is a QoE measurement configuration parameter corresponding to the target QoE reference identity, among at least one QoE measurement configuration parameter in the QoE parameter set.

In a third aspect, the present application provides another QoE configuration method, which includes: a source access network device obtaining a QoE parameter set; and the source access network device transmitting second information to a terminal device, where the second information includes the QoE parameter set.

In a possible implementation, the second information is carried in first QoE measurement configuration parameter information.

In a possible implementation, the second information is carried in connection release information.

In a fourth aspect, the present application provides a QoE configuration apparatus, which includes: a processing unit, configured to obtain a QoE parameter set; and the processing unit is further configured to: after a terminal device performs idle state cell reselection, instruct a communication unit to transmit first information to a currently accessed target access network device, where the first information includes the QoE parameter set.

In a possible implementation, the first information is carried in a connection setup complete message transmitted by the terminal device.

In a possible implementation, the first information is carried in a first QoE measurement report, where the first QoE measurement report is a report generated by the terminal device by performing a QoE measurement based on first QoE measurement configuration parameter information transmitted by a source access network device, the source access network device being an access network device to which the terminal device established a connection before performing cell reselection, and the first QoE measurement configuration parameter information being generated based on the QoE parameter set.

In a possible implementation, the communication unit is further configured to: receive second information from the source access network device; where the source access network device is an access network device to which the terminal device established a connection before performing cell reselection; and the second information includes the QoE parameter set.

In a possible implementation, the second information is carried in the first QoE measurement configuration parameter information.

In a possible implementation, the second information is carried in connection release information.

In a possible implementation, both the first information and the second information further include a target QoE reference identity, where the target QoE reference identity is used to mark a QoE measurement to be performed in the terminal device.

In a possible implementation, the communication unit is further configured to: receive second QoE measurement configuration parameter information from the target access network device, where the second QoE measurement configuration parameter information includes a second QoE measurement configuration parameter; and the processing unit is configured to perform a QoE measurement based on the second QoE measurement configuration parameter.

In a fifth aspect, the present application provides another QoE configuration apparatus, which includes: a communication unit and a processing unit; where the communication unit is configured to receive first information from a terminal device, where the first information includes a QoE parameter set; and the processing unit is configured to instruct the communication unit to transmit second QoE measurement configuration parameter information to the terminal device, where the second QoE measurement configuration parameter information is obtained based on the QoE parameter set.

In a possible implementation, the first information is carried in a connection setup complete message.

In a possible implementation, the first information is carried in a first QoE measurement report, where the first QoE measurement report is generated by performing a QoE measurement based on first QoE measurement configuration parameter information transmitted by a source access network device, the source access network device being an access network device to which the terminal device established a connection before performing cell reselection, and the first QoE measurement configuration parameter information being information generated by the target access network device based on the QoE parameter set.

In a possible implementation, the first information further includes a target QoE reference identity, where the target QoE reference identity is used to mark a QoE measurement to be performed in the terminal device.

In a possible implementation, the second QoE measurement configuration parameter information includes a second QoE measurement configuration parameter, where the second QoE measurement configuration parameter is a QoE measurement configuration parameter corresponding to the target QoE reference identity, among at least one QoE measurement configuration parameter in the QoE parameter set.

In a sixth aspect, the present application provides another QoE configuration apparatus, which includes: a processing unit, configured to obtain a QoE parameter set; and a communication unit, configured to transmit second information to a terminal device, where the second information includes the QoE parameter set.

In a possible implementation, the second information is carried in first QoE measurement configuration parameter information. In a possible implementation, the second information is carried in connection release information.

In a seventh aspect, the present application provides a QoE configuration apparatus, which includes: a processor and a memory; where the memory is configured to store computer-executable instructions, and when the QoE configuration apparatus is running, the processor executes the computer-executable instructions stored in the memory, to cause the QoE configuration apparatus to perform the QoE configuration method described in the first aspect and any possible implementation of the first aspect, or perform the QoE configuration method described in the second aspect and any possible implementation of the second aspect, or perform the QoE configuration method described in the third aspect and any possible implementation of the third aspect.

In an eighth aspect, the present application provides a computer-readable storage medium, which stores instructions that, when executed by a processor of a QoE configuration apparatus, cause the QoE configuration apparatus to perform the QoE configuration method described in the first aspect and any possible implementation of the first aspect, or perform the QoE configuration method described in the second aspect and any possible implementation of the second aspect, or perform the QoE configuration method described in the third aspect and any possible implementation of the third aspect.

In a ninth aspect, the present application provides a chip, which includes a processor and a communication interface, where the communication interface is coupled to the processor, and the processor is configured to execute a computer program or instructions to implement the QoE configuration method described in the first aspect and any possible implementation of the first aspect, or implement the QoE configuration method described in the second aspect and any possible implementation of the second aspect, or perform the QoE configuration method described in the third aspect and any possible implementation of the third aspect.

In a tenth aspect, the present application provides a computer program product including instructions, which, when executed on a computer, cause the computer to perform the QoE configuration method described in the first aspect and any possible implementation of the first aspect, or perform the QoE configuration method described in the second aspect and any possible implementation of the second aspect, or perform the QoE configuration method described in the third aspect and any possible implementation of the third aspect.

In an eleventh aspect, the present application provides a communication system, which includes a terminal device for performing the QoE configuration method described in the first aspect and any possible implementation of the t first aspect, a target access network device for performing the QoE configuration method described in the second aspect and any possible implementation of the second aspect, and a source access network device for performing the QoE configuration method described in the third aspect and any possible implementation of the third aspect.

These aspects or other aspects of the present application will become more concise and understandable in the following description.

The above solution at least brings the following beneficial effects: in the present application, after a terminal device in an idle state re-establishes a connection with a target access network device, the terminal device transmits a QoE parameter set to the target access network device. Correspondingly, the target access network device receives the QoE parameter set from the terminal device. In this way, the target access network device may obtain the QoE parameter set of the terminal device. Based on this, the target access network device may generate a QoE parameter for the terminal device based on the QoE parameter set, and transmit the QoE parameter to the terminal device, thereby enabling the terminal device to perform a QoE measurement according to the QoE parameter. Thus, the problem existing in the prior art is solved, which is that a terminal device in an idle state cannot perform the QoE measurement after performing cell handover due to the absence of the QoE parameter of the terminal device in the target access network device (i.e., an access network device to which the terminal device in the idle state establishes a connection after performing cell reselection).

### BRIEF DESCRIPTION OF THE DRAWINGS

To more clearly describe the technical solutions in the embodiments of the present application, the drawings required for describing the embodiments are briefly introduced below. It is apparent that the drawings in the following description are merely some embodiments of the present application. For those of ordinary skill in the art, other drawings may be obtained from these drawings without creative effort.
FIG. 1 is a flowchart illustrating signaling-based QoE measurement provided in an embodiment of the present application.
FIG. 2 is a flowchart illustrating management-based QoE measurement provided in an embodiment of the present application.
FIG. 3 is a flowchart illustrating configuration of broadcast service based on QoE measurement provided in an embodiment of the present application.
FIG. 4 is a schematic flowchart illustrating a handover execution procedure provided in an embodiment of the present application.
FIG. 5 is a schematic flowchart illustrating another handover execution procedure provided in an embodiment of the present application.
FIG. 6 is a schematic flowchart illustrating yet another handover execution procedure provided in an embodiment of the present application.
FIG. 7 is a schematic structural diagram of a communication system provided in an embodiment of the present application.
FIG. 8 is a first schematic flowchart of a QoE configuration method provided in an embodiment of the present application.
FIG. 9 is a second schematic flowchart of a QoE configuration method provided in an embodiment of the present application.
FIG. 10 is a third schematic flowchart of a QoE configuration method provided in an embodiment of the present application.
FIG. 11 is a fourth schematic flowchart of a QoE configuration method provided in an embodiment of the present application.
FIG. 12 is a fifth schematic flowchart of a QoE configuration method provided in an embodiment of the present application.
FIG. 13 is a sixth schematic flowchart of a QoE configuration method provided in an embodiment of the present application.
FIG. 14 is a schematic structural diagram of a QoE configuration apparatus provided in an embodiment of the present application.
FIG. 15 is a schematic structural diagram of a QoE configuration apparatus provided in an embodiment of the present application.
FIG. 16 is a schematic structural diagram of a QoE configuration apparatus provided in an embodiment of the present application.
FIG. 17 is a schematic structural diagram of a QoE configuration apparatus provided in an embodiment of the present application.

### DETAILED DESCRIPTION

A measurement method and apparatus, a storage medium and a device provided in the embodiments of the present application will be described in detail below with reference to the accompanying drawings.

The term "and/or" herein is merely an association relationship to describe associated objects, indicating that there may be three kinds of relationships. For example, "A and/or B" may indicate three cases where: A exists alone, both A and B exist, and B exists alone.

The terms "first", "second" and the like in the specification and accompanying drawings of the present application are used to distinguish different objects or to distinguish different processing of the same object, rather than to describe a specific order of the objects.

In addition, the terms "including", "having" and any variations thereof mentioned in the description of the present application are intended to cover a non-exclusive inclusion. For example, a process, method, system, product or device that includes a series of steps or units is not limited to the listed steps or units, but may optionally also include other steps or units that are not listed, or may optionally also include other steps or units inherent to such processes, methods, products or devices.

It should be noted that in the embodiments of the present application, terms such as "exemplary" or "for example" are used to indicate examples, illustrations or explanations. Any embodiment or design solution described as "exemplary" or "for example" in the embodiments of the present application should not be interpreted as being more preferred or advantageous than other embodiments or design solutions. Rather, the use of terms such as "exemplary" or "for example" is intended to present related concepts in a concrete manner.

In the description of the present application, unless otherwise specified, the meaning of the term "a plurality of" refers to two or more.

Before explaining and describing the embodiments of the present application, some related arts involved in the embodiments of the present application are introduced first.

The terms involved in the embodiments of the present application are explained below to facilitate the reader's understanding.

### I. QoE Measurement

The QoE measurement refers to measuring the comprehensive subjective usage experience of a user regarding the quality and performance of a service (including aspects such as effectiveness and availability), that is, measuring the usage experience of a user when using a service application. This enables operators to comprehensively evaluate the quality and performance of the service based on the QoE measurement result. Operators can learn about existing issues with the service according to the above comprehensive evaluation result from the user for the service, and adaptively adjust the communication network according to the existing issues with the service.

It should be noted that the QoE measurement includes: 1.1) signaling-based QoE measurement; and 1.2) management-based QoE measurement. Each of these will be described in detail below.

### 1.1 Signaling-based QoE measurement

The signaling-based QoE measurement refers to a QoE measurement performed for a specific terminal device, and the signaling-based QoE measurement may be performed in real time.

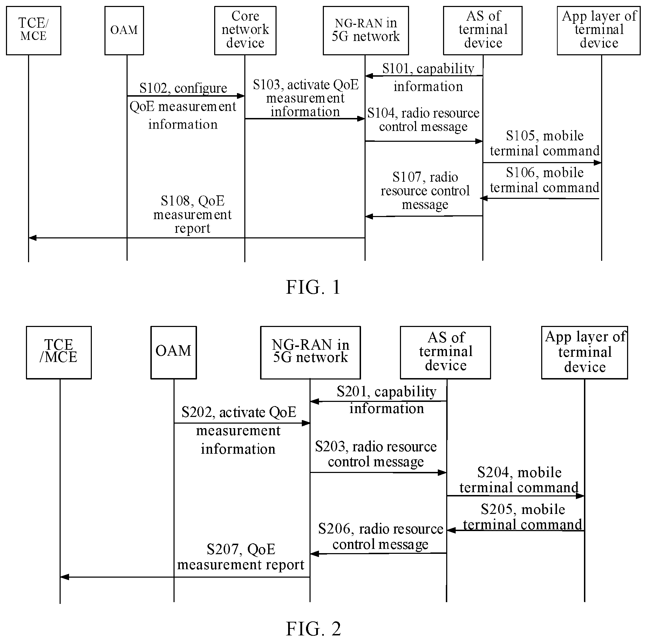

As illustrated in FIG. 1, the signaling-based QoE measurement procedure includes the following operations S101 to S108.

In S101, an access stratum (AS) of a terminal device transmits capability information to a radio access base station (next generation radio access network, NG-RAN) in a 5th generation mobile communication technology (5G) network. Accordingly, the NG-RAN receives the capability information transmitted from the AS of the terminal device.

Here, the capability information is used to indicate that the terminal device has the capability for QoE measurement.

In one possible implementation, the aforementioned capability information may be Capability Information transmitted by the terminal device to the NG-RAN.

In an optional implementation, the aforementioned S101 may be executed after S103. That is, after the NG-RAN receives activate QoE measurement information from a core network device, the terminal device then transmits the capability information to the NG-RAN via signaling.

In S102, an operations and maintenance (OAM) device transmits configure QoE measurement information to the core network device. Correspondingly, the core network device receives the configure QoE measurement information from the OAM device.

Here, the configure QoE measurement information is used to trigger the core network device to configure QoE measurement and carries QoE measurement configuration parameters.

In one possible implementation, the configure QoE measurement information may be Configure QoE Measurement information transmitted by the OAM device to the core network device.

It should be noted that the aforementioned configure QoE measurement information may include a configuration scope for QoE measurement and required QoE measurement configuration parameters.

It should be noted that if the NG-RAN determines based on the capability information that the terminal device does not have the capability for QoE measurement, and the OAM device will still transmit configure QoE measurement information to the core network device. That is, when the NG-RAN determines based on the capability information that the terminal device does not have the capability for QoE measurement, S102 to S103 will continue to be executed, but S104to S 108 will no longer be executed.

It should be noted that the OAM device refers to a function network element that performs operation, management and maintenance on the communication network according to the actual operation requirements of the operator's network. Here, operation mainly refers to analyzing, predicting, planning and configuring the communication network and services in the communication. Management mainly refers to managing and monitoring data in the communication network. Maintenance mainly refers to testing and fault management for the communication network and services within the communication network.

In S103, the core network device transmits the activate QoE measurement information to the NG-RAN. Correspondingly, the NG-RAN receives the activate QoE measurement information from the core network device.

Here, the activate QoE measurement information includes the QoE measurement configuration parameters.

In one possible implementation, the activate QoE measurement information may be Activate QoE Measurement information transmitted by the core network device to the NG-RAN.

It should be noted that after receiving the configure QoE measurement information from the OAM device, the core network device generates the activate QoE measurement information based on the configure QoE measurement information.

The above core network device may include at least one of the following network element function entities: access and mobility management function (AMF), session management function (SMF), user plane function (UPF), authentication server function (AUSF), network slice selection function (NSSF), network exposure function (NEF), policy control function (PCF), and unified data management (UDM).

The specific functions of the above network element function entities are as follows: AMF is responsible for user access and mobility management; SMF is responsible for user session management; AUSF is responsible for authenticating both 3GPP and non-3GPP access for users; UPF is responsible for user plane processing; NSSF is responsible for selecting a network slice to be used for user services; NEF is responsible for exposing 5G network capabilities to external systems; PCF is responsible for user policy control, including a session policy, a mobility policy and so on; and UDM is responsible for user subscription data management.

In S104, the NG-RAN transmits a radio resource control message to the AS of the terminal device. Correspondingly, the AS of the terminal device receives the radio resource control message from the NG-RAN.

Here, the radio resource control message includes the QoE measurement configuration parameters.

It should be noted that the radio resource control message is transmitted by the NG-RAN to the terminal device in the form of radio resource control signaling. The radio resource control message may also be transmitted by the NG-RAN to the terminal device through a physical downlink control channel (PDCCH). The radio resource control message may also be transmitted by the NG-RAN to the terminal device through radio resource control signaling pre-configuration information. The radio resource control message may also be transmitted by the NG-RAN to the terminal device through PDCCH activation information.

In one possible implementation, the radio resource control message may be a radio resource control (RRC) Message transmitted by the NG-RAN to the access stratum of the terminal device.

Optionally, the NG-RAN may generate the radio resource control message to be transmitted to the AS of the terminal device based on the QoE measurement configuration parameters included in the activate QoE measurement information and the QoE measurement parameters required by itself, so that the terminal device may perform measurements based on the above two types of QoE measurement parameters. In this way, a QoE measurement report generated by the terminal device may be used for both OAM optimization and NG-RAN optimization.

In S105, the AS of the terminal device transmits a mobile terminal command to an application (APP) layer of the terminal device. Correspondingly, the APP layer of the terminal device receives the mobile terminal command from the AS of the terminal device.

Here, the mobile terminal command includes the QoE measurement configuration parameters.

In one possible implementation, the mobile terminal command may be an Access Terminate command.

In S106, the APP layer of the terminal device transmits a mobile terminal command to the AS of the terminal device. Correspondingly, the AS of the terminal device receives the mobile terminal command from the APP layer of the terminal device.

Here, the mobile terminal command is used to instruct the APP layer of the terminal device to report the QoE measurement report to the AS of the terminal.

In one possible implementation, the mobile terminal command may be an Access Terminate command.

It should be noted that after the APP layer of the terminal device receives the mobile terminal command including the QoE measurement configuration parameters transmitted from the AS of the terminal device, the terminal device performs a QoE measurement according to the QoE measurement configuration parameters and generates the QoE measurement report.

In S107, the AS of the terminal device transmits the radio resource control message to the NG-RAN. Correspondingly, the NG-RAN receives the radio resource control message from the AS of the terminal device.

The radio resource control message includes the QoE measurement report.

In one possible implementation, the radio resource control message may be an RRC Message transmitted by the AS of the terminal device to the NG-RAN.

In S108, the NG-RAN transmits the QoE measurement report to a terminal control element (TCE)/media access control element (MCE). Accordingly, the TCE/MCE receives the QoE measurement report from the NG-RAN.

In one possible implementation, the QoE measurement report may be a QoE measurement report (QoE Report) transmitted by the NG-RAN to the TCE/MCE.

The signaling-based QoE measurement process has been explained in detail above. The management-based QoE measurement will be explained in detail below.

### 1.2 Management-based QoE measurement

The management-based QoE measurement refers to a QoE measurement performed for all terminal devices accessing a specific NG-RAN, and the management-based QoE measurement is mostly used in the post-processing phase (i.e., the next phase performed after the pre-processing phase is completed).

As illustrated in FIG. 2, the management-based QoE measurement procedure includes the following operations S201 to S207.

In S201, an AS of a terminal device transmits capability information to an NG-RAN. Correspondingly, the NG-RAN receives the capability information transmitted from the AS of the terminal device.

It should be noted that S201 is similar to S101 above and may be understood by referring to S101, which will not be repeated here.

In S202, an OAM device transmits activate QoE measurement information to the NG-RAN. Correspondingly, the NG-RAN receives the activate QoE measurement information from the OAM device.

The activate QoE measurement information carries QoE measurement configuration parameters.

In one possible implementation, the activate QoE measurement information may be Activate QoE Measurement information transmitted by the OAM device to the NG-RAN.

It should be noted that the difference between S202 and S102 is that: in S202, the activate QoE measurement information is directly transmitted from the OAM device to the NG-RAN, while in S102, the OAM device needs to first transmit configure QoE measurement information to the core network device, and then, the core network device generates activate QoE measurement information based on the configure QoE measurement information and transmits the activate QoE measurement information to the NG-RAN. Since management-based QoE measurement does not require the core network device to relay information, the activae QoE measurement information may be directly transmitted from the OAM device to the NG-RAN.

In S203, the NG-RAN transmits a radio resource control message to the AS of the terminal device. Correspondingly, the AS of the terminal device receives the radio resource control message from the NG-RAN.

It should be noted that S203 is similar to S104 above and may be understood by referring to S104, which will not be repeated here.

In S204, the AS of the terminal device transmits a mobile terminal command to an APP layer of the terminal device. Correspondingly, the APP layer of the terminal device receives the mobile terminal command from the AS of the terminal device.

It should be noted that S204 is similar to S105 above and may be understood by referring to S105, which will not be repeated here.

In S205, the APP layer of the terminal device transmits a mobile terminal command to the AS of the terminal device. Correspondingly, the AS of the terminal device receives the mobile terminal command from the APP layer of the terminal device.

It should be noted that S205 is similar to S106 above and may be understood by referring to S106, which will not be repeated here.

In S206, the AS of the terminal device transmits a radio resource control message to the NG-RAN. Correspondingly, the NG-RAN receives the radio resource control message from the AS of the terminal device.

It should be noted that S206 is similar to S107 above and may be understood by referring to S107, which will not be repeated here.

In S207, the NG-RAN transmits a QoE measurement report to a TCE/MCE. Correspondingly, the TCE/MCE receives the QoE measurement report from the NG-RAN.

It should be noted that S207 is similar to S108 above and may be understood by referring to S108, which will not be repeated here.

### II. Configuration of Broadcast Service

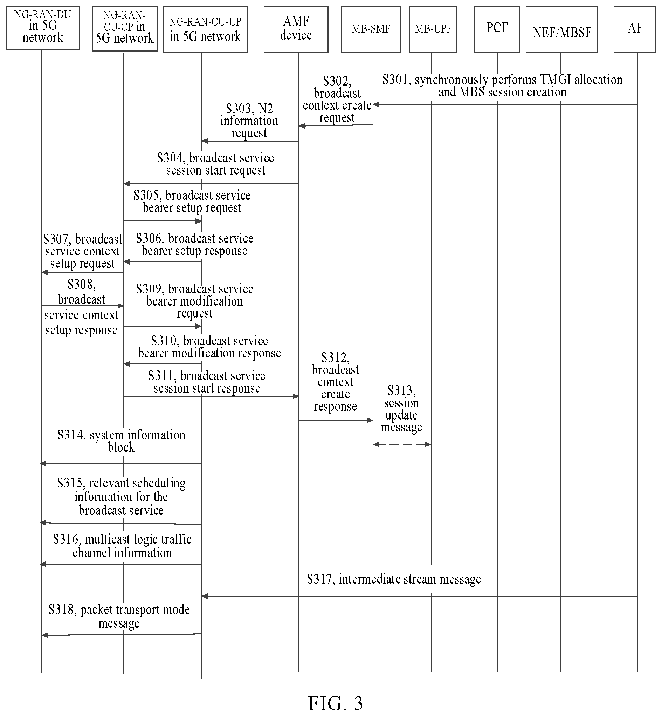

As illustrated in FIG. 3, the specific procedure of configuration of the broadcast service may include the following operations S301 to S318.

In S301, a target network element performs Temporary Mobile Group Identity (TMGI) allocation and multicast broadcast service (MBS) session creation.

Here, the target network element includes: application function (AF), network element function (NEF)/multicast broadcast service function (MBSF), packet control function (PCF), multicast broadcast user plane function (MB-UPF), and multicast broadcast session management function (MB-SMF).

It should be noted that the specific implementation procedures of the above TMGI allocation and MBS session creation may refer to the prior art, which will not be elaborated in the present application.

In S302, the MB-SMF transmits a broadcast context create request to the AMF. Correspondingly, the AMF receives the broadcast context create request from the MB-SMF.

The broadcast context create request may include: TMGI, synchronization status message (SSM), 5G authorized QoS profile, and MBS service area.

It should be noted that the above is only one example of the broadcast context create request, and the broadcast context create request may also include other information, which is not limited in the present application.

In one possible implementation, the broadcast context create request may be a Namf_MBSBroadcast Context Create Request transmitted by the MB-SMF to the AMF.

In S303, the AMF transmits an N2 information request to the NG-RAN-central unit-user plane (NG-RAN-CU-UP) unit in the 5G network. Correspondingly, the NG-RAN-CU-CP receives the N2 information request from the AMF.

The N2 information request may include: TMGI, SSM, 5G authorized QoS profile, and MBS service area.

In one possible implementation, the N2 information request may be an N2 message Request transmitted by the AMF to the NG-RAN-CU-UP unit.

In S304, the AMF transmits a broadcast service session start request to the NG-RAN-central unit-control plane (NG-RAN-CU-CP) unit. Accordingly, the NG-RAN-CU-UP unit receives the broadcast service session start request transmitted by the AMF device.

In one possible implementation, the broadcast service session start request is an MBS SESSION START REQUEST transmitted by the AMF to the NG-RAN-CU-CP unit.

In S305, the NG-RAN-CU-CP unit transmits a broadcast service bearer setup request to the NG-RAN-central unit-user plane (NG-RAN-CU-UP) unit. Correspondingly, the NG-RAN-CU-UP unit receives the multicast broadcast service bearer setup request transmitted by the NG-RAN-CU-CP unit.

The multicast broadcast service bearer setup request may include: TMGI, SSM, and media resource board (MRB) setup list (MRB to be setup list).

In one possible implementation, the NG-RAN-CU-CP unit transmits an MBS BEARER SETUP REQUEST to the NG-RAN-CU-UP unit.

In S306, the NG-RAN-CU-UP unit receives a broadcast service bearer setup response transmitted by the NG-RAN-CU-CP unit. Correspondingly, the NG-RAN-CU-CP unit receives the multicast broadcast service bearer setup response transmitted by the NG-RAN-CU-UP unit.

The multicast broadcast service bearer setup response may include: TMGI, SSM, and MRB setup list.

In one possible implementation, the NG-RAN-CU-UP transmits a MBS BEARER SETUP RESPONSE to the NG-RAN-CU-CP.

In S307, the NG-RAN-CU-CP unit transmits a broadcast service context setup request to an NG-RAN-distributed unit (NG-RAN-DU) unit in the 5G network. Correspondingly, the NG-RAN-DU unit receives the broadcast service context setup request transmitted by the NG-RAN-CU-CP unit.

The broadcast service context setup request may include: TMGI, SSM, and MRB setup list (MRB to be setup list).

In one possible implementation, the NG-RAN-CU-CP unit transmits a multicast broadcast service context setup request (MBS CONTEXT SETUP REQUEST) to the NG-RAN-DU unit.

In S308, the NG-RAN-DU unit transmits a multicast broadcast service context setup response (MBS CONTEXT SETUP RESPONSE) to the NG-RAN-CU-CP unit. Correspondingly, the NG-RAN-CU-CP unit receives the multicast broadcast service context setup response transmitted by the NG-RAN-DU unit.

In one possible implementation, the NG-RAN-DU unit transmits a multicast broadcast service context setup response (MBS CONTEXT SETUP RESPONSE) to the NG-RAN-CU-CP unit.

In S309, the NG-RAN-CU-CP unit transmits a multicast broadcast service bearer modification request (MBS BEARER MODIFICATION REQUEST) to the NG-RAN-CU-UP unit. Correspondingly, the NG-RAN-CU-UP unit receives the broadcast service bearer modification request transmitted by the NG-RAN-CU-CP unit.

In one possible implementation, the NG-RAN-CU-CP unit transmits a multicast broadcast service bearer modification request (MBS MODIFICATION REQUEST) to the NG-RAN-CU-UP unit.

In S310, the NG-RAN-CU-UP unit transmits a broadcast service bearer modification response to the NG-RAN-CU-CP unit. Correspondingly, the NG-RAN-CU-UP unit receives the multicast broadcast service bearer modification response transmitted by the NG-RAN-CU-CP unit.

In one possible implementation, the NG-RAN-CU-UP unit transmits a multicast broadcast service bearer modification response (MBS MODIFICATION RESPONSE) to the NG-RAN-CU-CP unit.

In S311, the NG-RAN-CU-CP unit transmits a broadcast service session start response to the AMF device. Correspondingly, the AMF device receives the broadcast service session start response transmitted by the NG-RAN-CU-CP unit.

In one possible implementation, the NG-RAN-CU-CP unit transmits a multicast broadcast service session start response (MBS SESSION START RESPONSE) to the AMF device.

In S312, the AMF transmits a broadcast context create response to the MB-SMF. Correspondingly, the MB-SMF receives the broadcast context create response from the AMF.

In one possible implementation, the broadcast context create response may be the Namf_MBSBroadcast Context Create Response transmitted by the AMF to the MB-SMF.

Optionally, in S313, the MB-SMF transmits a session update message to the MB-UPF. Correspondingly, the MB-UPF receives the session update message from the MB-SMF.

In one possible implementation, the session update message may be the N4mb Session Update transmitted by the MB-SMF to the MB-UPF.

Based on the above scheduling procedure, the NG-RAN completes the relevant configuration for the broadcast service. Subsequently, the NG-RAN transmits a broadcast service message. Correspondingly, the terminal device receives the broadcast service of interest based on the broadcast service message transmitted by the base station.

In S314, the NG-RAN transmits broadcast multicast control channel (MCCH) information to the terminal device through a system information block (SIB).

For example, SIBx may be SIB13, SIB15, or SIB20.

In one possible implementation, the above broadcast multicast control channel information may be the MCCH info transmitted by the NG-RAN to the terminal device through SIBx.

In S315, the NG-RAN transmits relevant scheduling information for the broadcast service to the terminal device through the physical downlink control channel (PDCCH).

In one possible implementation, the above relevant scheduling information for the broadcast service may be the broadcast multicast control channel change notification (MCCH change notification) information transmitted by the NG-RAN to the terminal device.

In S316, the NG-RAN transmits multicast logic traffic channel information to the terminal device through the physical downlink shared channel (PDSCH).

In one possible implementation, the multicast logic traffic channel (multicast traffic channel, MTCH) information includes: TMGI, MBMS Radio network temporary identifier (M-RNTI) and so on.

In S317, the AF transmits an intermediate stream message to the NG-RAN-CU-UP unit through NEF/MBSF, PCF, MB-UPF, MB-SMF, and AMF. Correspondingly, the NG-RAN-CU-UP unit receives the intermediate stream message from the AF.

In one possible implementation, the intermediate stream message may be a Media stream message transmitted by the AF to the NG-RAN-CU-UP unit.

In S318, the NG-RAN-CU-UP transmits a packet transport mode message to the terminal device through the NG-RAN-CU-CP and NG-RAN-DU. Correspondingly, the terminal device receives the packet transport mode message from the NG-RAN-CU-CP unit.

In one possible implementation, the packet transport mode message may be a Packet Transport Mode transmission message transmitted by the NG-RAN-CU-UP to the terminal device.

### III. Handover

Handover refers to the process in which a terminal device switches from one serving cell to another serving cell.

It should be noted that the terminal device can perform handover in either a connected state or an inactive state. However, the handover procedure of the terminal device in the connected state differs from that in the inactive state, which will be described below.

### 3.1. Xn interface-based handover procedure of terminal device in connected state

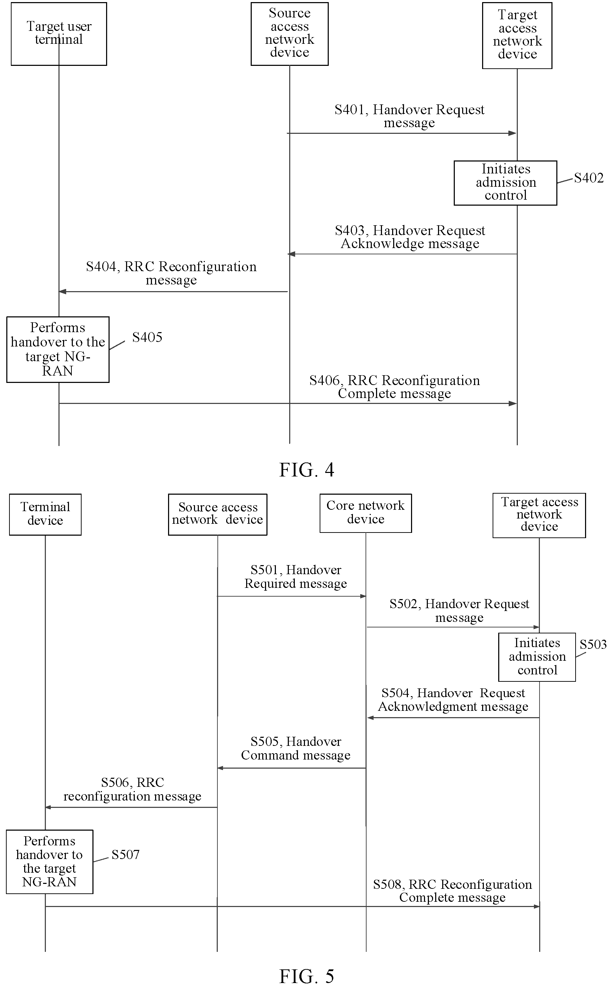

Xn interface refers to the interface between NG-RAN nodes. As shown in FIG. 4, the Xn interface-based handover procedure of terminal device in connected state may include steps S401 to S406.

In S401, the source NG-RAN transmits a Handover Request message to the target NG-RAN.

It should be understood that when the terminal device's communication state is the connected state and the terminal device is moving from a cell covered by the source NG-RAN to a cell covered by the target NG-RAN, to ensure the communication quality of the terminal device, the source NG-RAN can support the handover of the terminal device to the target NG-RAN based on the Xn interface between the source NG-RAN and the target NG-RAN. In this case, the source NG-RAN may transmit a Handover Request message to the target NG-RAN. Correspondingly, the target NG-RAN may receive the Handover Request message from the source NG-RAN.

In S402, the target NG-RAN initiates admission control.

Specifically, after receiving the Handover Request message from the source NG-RAN, the target NG-RAN may initiate admission control to evaluate the current network load level, thereby determining whether to permit the terminal device to access the network.

In S403, the target NG-RAN transmits a Handover Request Acknowledge message to the source NG-RAN.

In one possible implementation, after evaluating the current network load level, if the target NG-RAN determines to permit the terminal device to access the network, it can transmit a Handover Request Acknowledge message to the source NG-RAN. Correspondingly, the source NG-RAN can receive the Handover Request Acknowledge message from the target NG-RAN.

In S404, the source NG-RAN transmits a Radio Resource Control Reconfiguration (RRC reconfiguration) message to the terminal device.

Specifically, after receiving the handover request acknowledgment message from the target NG-RAN, the source NG-RAN may indicate the terminal device to perform a handover to the target NG-RAN. In this case, the source NG-RAN may transmit an RRC reconfiguration message to the terminal device. Correspondingly, the terminal device may receive the RRC reconfiguration message from the source NG-RAN.

In S405, the terminal device performs handover to the target NG-RAN.

It should be understood that after receiving the RRC reconfiguration message from the source NG-RAN, the terminal device can perform handover to the target NG-RAN.

In one possible implementation, the terminal device may switch to a cell under the target NG-RAN from a cell under the source NG-RAN. That is, the terminal device initiates Switch to New Cell.

In S406, the terminal device transmits a Radio Resource Control Reconfiguration Complete (RRC Reconfiguration Complete) message to the target NG-RAN.

It should be understood that after the terminal device switches to the target NG-RAN, the terminal device may transmit an RRC Reconfiguration Complete message to the target NG-RAN. Correspondingly, the target NG-RAN may receive the RRC Reconfiguration Complete message from the terminal device to confirm the successful handover of the terminal device.

### 3.2 NG interface-based handover procedure of terminal device in connected state

NG interface refers to the interface between an NG-RAN and a core network device. As shown in FIG. 5, the NG interface-based handover procedure of terminal device in connected state may include S501 to S508.

In S501, the source NG-RAN transmits a Handover Required message to the core network device.

It should be understood that when the terminal device's communication state is in the connected state and the terminal device is moving from a cell covered by the source NG-RAN to a cell covered by the target NG-RAN, to ensure the communication quality of the terminal device, the source NG-RAN can support the handover of the terminal device to the target NG-RAN based on the NG interface between the source NG-RAN and the core network device. In this case, the source NG-RAN may transmit a Handover Required message to the core network device. Correspondingly, the core network device may receive the Handover Required message from the source NG-RAN.

In one possible implementation, the core network device may be an AMF device.

In S502, the core network device transmits a Handover Request message to the target NG-RAN.

Specifically, in order to support the handover of the terminal device to the target NG-RAN, the core network device may transmit a Handover Request message to the target NG-RAN after receiving the Handover Required message from the source NG-RAN. Correspondingly, the target NG-RAN may receive the Handover Request message from the core network device.

It should be noted that due to differences in the included content and the devices involved in transmission and reception, the Handover Request message in S502 and the Handover Request message in S201 are distinct messages.

In S503, the target NG-RAN initiates admission control.

It should be understood that, regarding the specific implementation of S503, reference may be made to the foregoing descriptions about S202, and no further details will be provided here.

In S504, the target NG-RAN transmits a Handover Request Acknowledgment message to the core network device.

In one possible implementation, after evaluating the current network load level, if the target NG-RAN determines to permit the terminal device to access the network, it can transmit a Handover Request Acknowledgment message to the core network device. Correspondingly, the core network device can receive the Handover Request Acknowledgment message from the target NG-RAN.

It should be noted that, due to differences in the included content and the devices involved in transmission and reception, the Handover Request message in S504 and the Handover Request Acknowledgment message in S403 are distinct messages.

In S505, the core network device transmits a Handover Command message to the source NG-RAN.

Specifically, upon receiving the Handover Request Acknowledgment message from the target NG-RAN, the core network device can determine that the target NG-RAN permits the terminal device to hand over to the network served by the target NG-RAN. In this case, the core network device may transmit a Handover Command message to the source NG-RAN. Correspondingly, the source NG-RAN may receive the Handover Command message from the core network device.

In S506, the source NG-RAN transmits an RRC reconfiguration message to the terminal device.

In S507, the terminal device performs a handover to the target NG-RAN.

In S508, the terminal device transmits an RRC Reconfiguration Complete message to the target NG-RAN.

It should be noted that, regarding the specific implementations of S506 to S508, reference may be made to the foregoing descriptions about S404 to S406, and no further details will be provided here.

### 3.2: Handover procedure of terminal device in inactive state

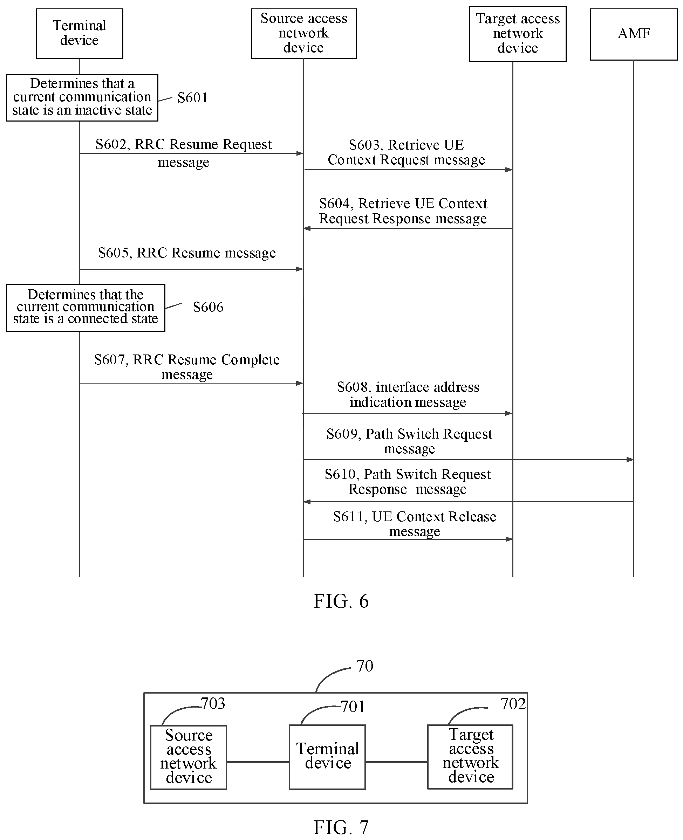

As shown in FIG. 6, the handover procedure of terminal device in inactive state may include S601 to S611.

In S601, the terminal device determines that its current communication state is an inactive state.

In S602, the terminal device transmits a Radio Resource Control Resume Request (RRC Resume Request) message to the NG-RAN to be connected (the target access network device).

It should be understood that when the terminal device is in the inactive state and is moving to a cell covered by the NG-RAN to be connected, if it needs to re-establish a communication connection, the terminal device can transmit an RRC Resume Request message to the NG-RAN to be connected. Correspondingly, the NG-RAN to be connected can receive the RRC Resume Request message from the terminal device.

In S603, the NG-RAN to be connected transmits a Retrieve UE Context Request message to the last serving NG-RAN (the source access network device).

Here, the last serving NG-RAN is the NG-RAN that maintained the communication connection with the terminal device when the terminal device switches from the connected state to the inactive state.

It should be noted that after receiving the RRC Resume Request message from the terminal device, the NG-RAN to be connected may transmit a Retrieve UE Context Request message to the last serving NG-RAN to determine the relevant information required to establish a communication connection with the terminal device. Correspondingly, the last serving NG-RAN may receive the Retrieve UE Context Request message from the NG-RAN to be connected.

In S604, the last serving NG-RAN transmits a Retrieve UE Context Response message to the NG-RAN to be connected.

It should be understood that in response to the Retrieve UE Context Request message, the last serving NG-RAN can transmit the Retrieve UE Context Response message to the NG-RAN to be connected. Correspondingly, the NG-RAN to be connected can receive the Retrieve UE Context Response message from the last serving NG-RAN to determine the relevant information required to establish a communication connection with the terminal device.

In S605, the NG-RAN to be connected transmits a Radio Resource Control Resume (RRC Resume) message to the terminal device.

It should be understood that after determining the relevant information required to establish a communication connection with the terminal device, the NG-RAN to be connected may transmit an RRC Resume message to the terminal device. Correspondingly, the terminal device may receive the RRC Resume message from the NG-RAN, and establish a communication connection with the NG-RAN to be connected.

In S606, the terminal device determines that the current communication state is a connected state.

In S607, the terminal device transmits a Radio Resource Control Resume Complete (RRC Resume Complete) message to the NG-RAN to be connected.

It should be understood that after determining that the current communication state is a connected state, the terminal device may transmit an RRC Resume Complete message to the NG-RAN to be connected. Correspondingly, the NG-RAN to be connected may receive the RRC Resume Complete message from the terminal device to confirm that the terminal device has completed the handover.

In S608, the NG-RAN to be connected transmits an interface address indication message to the last serving NG-RAN.

In one possible implementation, the interface address indication message may be the Xn-uaddress indication.

In S609, the NG-RAN to be connected transmits a Path Switch Request (PATH SWITCH REQUEST) message to the AMF device.

In S610, the AMF device transmits a Path Switch Request Response (PATH SWITCH REQUEST RESPONSE) message to the NG-RAN to be connected.

In S611, the NG-RAN to be connected transmits a terminal device connection release (UE Context Release) message to the last serving NG-RAN.

### IV. Radio bearer

A radio bearer refers to a channel used for carrying data or signaling transmissions. The aforementioned radio bearer can be categorized into signaling radio Bearer (SRB) and data radio bearers (DRB). The SRB is used for carrying signaling transmissions, while the DRB is used for carrying data transmissions.

The above provides a brief introduction to some concepts involved in the embodiments of the present application.

The present application can be applied to 4th generation (4G) systems various systems evolved from 4G systems, 5G, and various systems evolved from 5G systems. Here, a 4G system may also be referred to as an evolved packet system (EPS). In the 4G system, the core network may be referred to as EPC, and the access network may be referred to as long term evolution (LTE). In the 5G system, the core network may be referred to as 5GC, and the access network may be referred to as new radio (NR). For ease of description, the following uses the application of this solution in the 5G system as an example to exemplarily describe the present application. However, it should be understood that the present application is equally applicable to 4G systems, 3rd generation (3G) systems, etc., which is not limited thereto.

As shown in FIG. 7, FIG. 7 illustrates a schematic diagram of a communication system 70 provided in an embodiment of the present application. The communication system 70 may include: a terminal device 701 and a target access network device 702.

The terminal device 701 is configured to: determine first information including a QoE parameter set, and transmit the first information to a currently accessed target access network device 702 after the terminal device 701 performs cell reselection.

It should be noted that terminal device 701 is a device with wireless communication function, which may be deployed on land, including indoor or outdoor, handheld, or vehicle-mounted. Alternatively, the terminal device may be deployed on water surfaces (e.g., ships). Alternatively, the terminal device may be deployed in the air (e.g., on airplanes, balloons, satellites). The terminal device 701 is also referred to as a mobile station (MS), a mobile terminal (MT), or a terminal, and it is a device that provides users with voice and/or data connectivity. For example, the terminal device 701 includes a handheld device or a vehicle-mounted device, with wireless connectivity function. Currently, the terminal device 701 may be: a mobile phone, tablet, laptop, palmtop computer, mobile internet device (MID), wearable device (e.g., smartwatch, smart wristband, pedometer), vehicle-mounted device (e.g., in cars, bicycles, electric vehicles, airplanes, ships, trains, high-speed rail), virtual reality (VR) device, augmented reality (AR) device, wireless terminal in industrial control, smart home device (e.g., refrigerator, television, air conditioner, electric meter), smart robot, workshop equipment, wireless terminal in self driving, wireless terminal in remote medical surgery, wireless terminal in smart grid, wireless terminal in transportation safety, wireless terminal in smart city, or wireless terminal in smart home, aerial device (e.g., smart robot, hot air balloon, drone, airplane), etc. In one possible application scenario of the present application, the terminal device is one that frequently operates on the ground, such as a vehicle-mounted device. In the present application, for ease of description, a chip deployed in the aforementioned devices, such as a System-on-a-Chip (SoC), a base band chip, or other chips with communication function, may also be referred to as the terminal device 701.

Optionally, terminal device 701 may be an embedded communication device or a user handheld communication device, which includes a mobile phone, tablet, etc.

As an example, in the embodiments of the present application, the terminal device 701 may also be a wearable device. The wearable device, also referred to as a wearable smart device, is a general term for wearable devices developed by applying wearable technology to intelligently design daily wearable, such as glasses, gloves, watches, clothing, and shoes. The wearable device is a portable device that is worn directly on the body or integrated into the user's clothing or accessories. The wearable device is not merely a hardware device but also achieves powerful functionalities through software support, data interaction, and cloud interaction. Broadly defined wearable smart devices include the smart device with full functionality, large size, and the capability to implement all or part of its functions without depending on the smartphone, such as a smart watch, or smart glasses, as well as the smart device focused on a certain type of application functions that requires coordination with other devices like smartphones, such as various smart bracelets or smart jewelry devices for vital sign monitoring.

The target access network device 702 is configured to receive the first information from the terminal device 701.

Optionally, as shown in FIG. 7, the communication system 70 may include a source access network device 703.

The source access network device 703 is configured to transmit second information including a QoE parameter set to the terminal device 701.

The target access network device 702 and the source access network device 703 are devices belong to the access network side in the communication system 70, and have devices with wireless transceiver function or chips or chip systems that can be integrated into such devices. The target access network device 702 and the source access network device 703 include, but are not limited to: access points (APs) in WiFi systems, e.g., home gateways, routers, servers, switches, and bridges; evolved NodeBs (eNBs); radio network controllers (RNCs); NodeBs (NBs); base station controllers (BSCs); base transceiver stations (BTSs); home base stations (e.g., home evolved NodeBs or home NodeBs (HNBs)), base band units (BBUs), wireless relay nodes, wireless backhaul nodes, transmission and reception points (TRPs) or transmission points (TPs), etc. The target access network device 702 and the source access network device 703 may also be 5G base stations, such as gNBs in new radio (NR) systems, or transmission points (TRPs or TPs), an antenna panel or a group of antenna panels (including multiple antenna panels) of a base station in a 5G system; alternatively, they may be network nodes constituting a gNB or a transmission point, such as base band units (BBUs), distributed units (DUs), road side units (RSUs) with base station functionality, or NG radio access network (NG-Ran) devices. The target access network device 702 and the source access network device 703 also include base stations under different networking modes, such as master evolved NodeBs (MeNBs), secondary eNBs/gNBs (SeNBs or SgNBs). The target access network device 702 and the source access network device 703 also include devices of different types, such as terrestrial base stations, aerial base stations, and satellite base stations.

It should be noted that FIG. 7 is only an exemplary framework diagram. The number of nodes included in FIG. 7 is not limited, and besides the functional nodes shown in FIG. 7, other nodes, such as a network management node 704, may also be included, which is not limited in the present application.

The communication system 70 provided in the embodiments of the present application can be various communication systems, such as a code division multiple access (CDMA) system, a time division multiple access (TDMA) system, a frequency division multiple access (FDMA) system, an orthogonal frequency-division multiple access (OFDMA) system, a single carrier FDMA (SC-FDMA) system, and other systems. The term "system" can be used interchangeably with "network." A CDMA system may implement wireless technologies such as universal terrestrial radio access (UTRA) and CDMA2000. UTRA may include wideband CDMA (WCDMA) technology and other variants of CDMA technology. CDMA2000 may cover standards, such as interim standard (IS) 2000 (IS-2000), IS-95, and IS-856. A TDMA system may implement wireless technologies such as the global system for mobile communication (GSM). An OFDMA system may implement wireless technologies such as evolved UTRA (E-UTRA), ultra mobile broadband (UMB), IEEE 802.11 (Wi-Fi), IEEE 802.16 (WiMAX), IEEE 802.20, and Flash OFDMA. UTRA and E-UTRA are UMTS and the evolved version of UMTS, respectively. The 3GPP introduces new releases of the UMTS utilizing E-UTRA, starting with the long term evolution (LTE) and continuing through its subsequent evolutions. 5G communication systems and NR are communication systems under ongoing research. In addition, the communication system can also utilize future-oriented communication technologies, and the technical solutions provided in the embodiments of the present application are applicable to such communication system.

Furthermore, the communication system described in the embodiments of the present application is intended to illustrate the technical solutions in the embodiments more clearly and does not limit the scope of the technical solutions provided in the embodiments. Those skilled in the art can understand that as network architectures evolve and new communication systems emerge, the technical solutions provided in the embodiments of the present application are equally applicable to similar technical problems.

QoE measurement refers to the process in which a terminal device measures performance parameters of the operator's network and transmits the measurement results to the operator's equipment. After receiving the measurement results, the operator's equipment can perform network optimization based on the measurement results provided by the terminal device. In this way, the operator's network can provide a better user experience for the terminal device.

In related art, during a QoE measurement, a source access network device transmits QoE measurement configuration information to the terminal device, and correspondingly, the terminal device receives the QoE measurement configuration information. The terminal device stores the QoE measurement configuration information and performs the QoE measurement according to the QoE measurement configuration information. When the terminal device is in an inactive state, the NG-RAN to be connected transmits a retrieve terminal device context request (Retrieve UE Context Request) message to the last serving NG-RAN. In addition, the last serving NG-RAN transmits a retrieve terminal device context response (Retrieve UE Context Response) message to the NG-RAN to be connected. Thus, the NG-RAN to be connected can obtain the QoE parameter set of the terminal device from the last serving NG-RAN based on the Retrieve UE Context Response, thereby enabling the NG-RAN to be connected to configure QoE measurements for the terminal device according to the QoE parameter set of the terminal device.

However, in a case where the terminal device is in an idle state, the source access network device will delete the QoE measurement configuration information corresponding to the terminal device. Thus, after the UE re-accesses to a target access network device, the target access network device does not have saved QoE measurement configuration information corresponding to the terminal device. Consequently, when the terminal device in the idle state undergoes cell handover, the target access network device to which the new cell after the handover belongs will be unable to configure QoE measurement configuration information for the terminal device. As a result, the terminal device cannot perform the QoE measurement after the cell handover. Therefore, how to resolve the problem that a terminal device in an idle state cannot perform the QoE measurement after performing cell handover remains a technical problem to be solved.

To address the technical problem existing in the related art, in the present application, after a terminal device in an idle state re-establishes a connection with a target access network device, the terminal device transmits a QoE parameter set to the target access network device. Correspondingly, the target access network device receives the QoE parameter set from the terminal device. In this way, the target access network device may obtain a QoE parameter of the terminal device. Based on this, the target access network device may generate a QoE parameter for the terminal device based on the QoE parameter set, and transmit the QoE parameter to the terminal device, thereby enabling the terminal device to perform a QoE measurement according to the QoE parameter. Thus, the problem existing in the prior art is solved, which is that a terminal device in an idle state cannot perform the QoE measurement after performing cell handover due to the absence of the QoE parameter of the terminal device in the target access network device (i.e., the access network device to which the terminal device in the idle state establishes a connection after performing cell reselection).

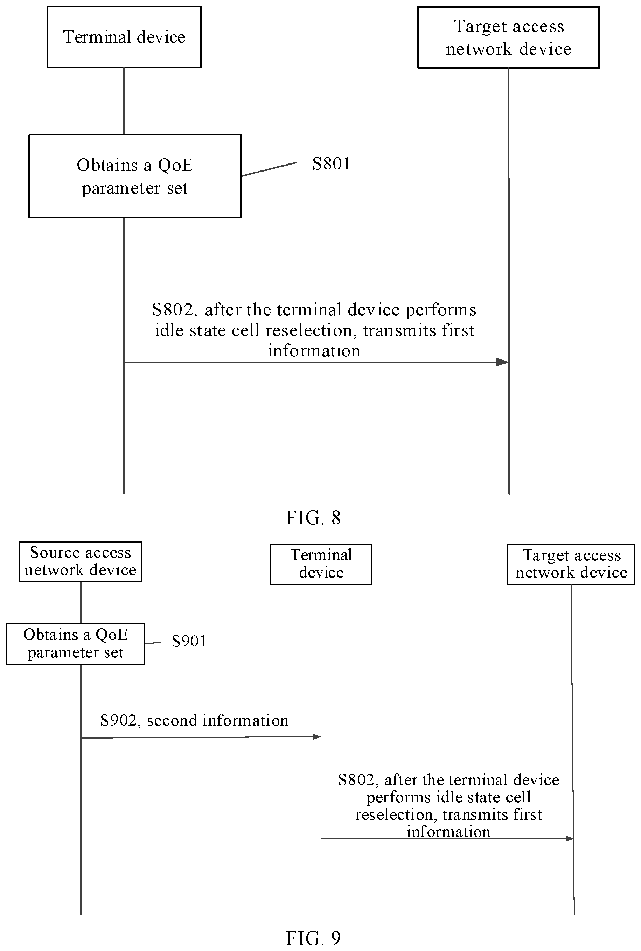

The following provides a detailed description of the QoE configuration method provided by the embodiments of the present application with reference to FIG. 8. As illustrated in FIG. 8, the QoE configuration method includes following operations.

In S801, a terminal device obtains a QoE parameter set.

Here, the QoE parameter set is a QoE parameter set visible to an access network device.

Optionally, the QoE parameter set visible to the access network device refers to a set of all or part of parameters, configured by an OAM device for multiple access network devices, that can be used for optimization. Optionally, each parameter in the aforementioned all or part of the parameters is an un-encapsulated parameter, so that the multiple access network devices can directly obtain QoE parameters in the QoE parameter set without de-capsulation.

In S802, after the terminal device performs idle state cell reselection, the terminal device transmits first information to a currently accessed target access network device. Accordingly, the target access network device receives the first information from the terminal device.

Here, the first information includes the QoE parameter set.

Optionally, the first information further includes a target QoE reference identity, where the target QoE reference identity is used to mark a QoE measurement to be performed in the terminal device.

It should be noted that the terminal device includes at least one QoE reference identity.

Optionally, the QoE measurement may be a QoE measurement of an application to be measured in the terminal device. Accordingly, the QoE reference identity is an identifier of the application to be measured.

For example, an identifier of the target QoE reference identity includes: an identifier of a terminal application 1, an identifier of a terminal application 2, an identifier of a terminal application 3, and an identifier of a terminal application 4.

In one possible implementation, since the first information includes the target QoE reference identity, after receiving the first information, the target access network device may determine, based on the target QoE reference identity in the first information, a target QoE measurement corresponding to the target QoE reference identity from the QoE parameter set, and a second QoE measurement configuration parameter for the target QoE measurement. After this, the target access network device generates second QoE measurement configuration information based on the second QoE measurement configuration parameter and transmits the second QoE measurement configuration information to the terminal device based on an identifier of the terminal device. Based on this, the target access network device may configure an appropriate second QoE measurement configuration parameter for the terminal device based on the needs of the terminal device.

In another possible implementation, the OAM device configures a respective QoE reference identity for each QoE measurement among multiple QoE measurements and transmits the respective QoE reference identity configured for each QoE measurement among the multiple QoE measurements to a source access network device. The source access network device constructs a QoE reference list based on the QoE reference identity, the QoE measurement corresponding to the QoE reference identity, and a QoE measurement configuration parameter corresponding to the QoE reference identity, and transmits the QoE reference list to the terminal device. After the target access network device obtains the QoE reference list from the terminal device, the target access network device can determine, based on the target QoE reference identity in the first information and the QoE reference list, a second QoE measurement configuration parameter from at least one QoE measurement configuration parameter in the QoE parameter set.

Optionally, after the terminal device performs idle state cell reselection, in a case where a cell after reselection and a cell before reselection may belong to the same access network device, the target access network device is the source access network device, and the source access network device is an access network device to which the terminal device established a connection before performing cell reselection.

Optionally, the first information transmitted by the terminal device to the target access network device can be carried in the following two manners. In the first manner, the first information is carried in a connection setup complete message; and in the second manner, the first information is carried in a first QoE measurement report.

The following provides a detailed explanation of the first manner and the second manner.

The first manner: the first information is carried in the connection setup complete message.

Optionally, the first information is carried in a connection setup complete message transmitted by the terminal device to the target access network device.

Optionally, the connection setup complete message is an RRC connection setup complete message, i.e., RRCSetupComplete-v1610-IEs.

As illustrated in Example 1, the specific message content of the connection setup complete message carrying the first information may include:

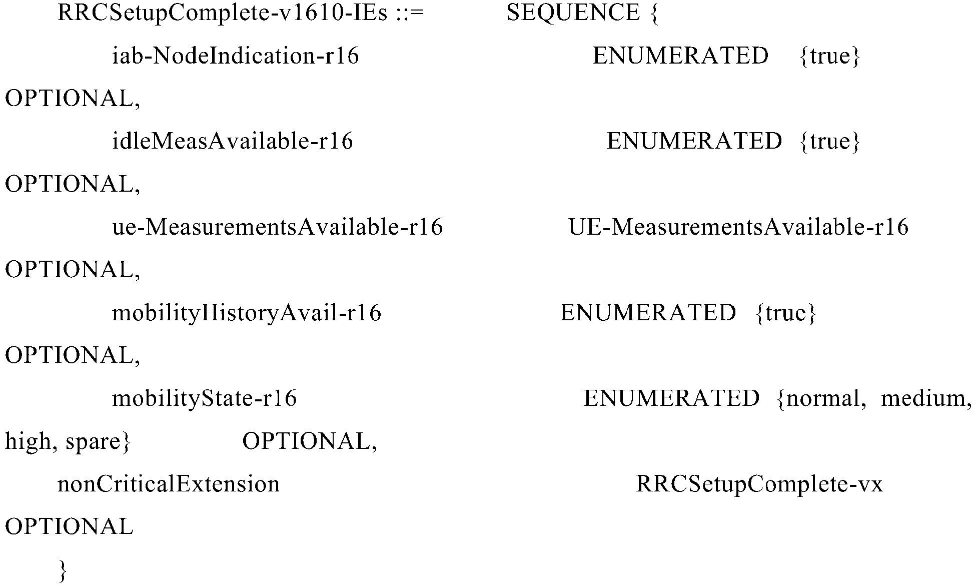

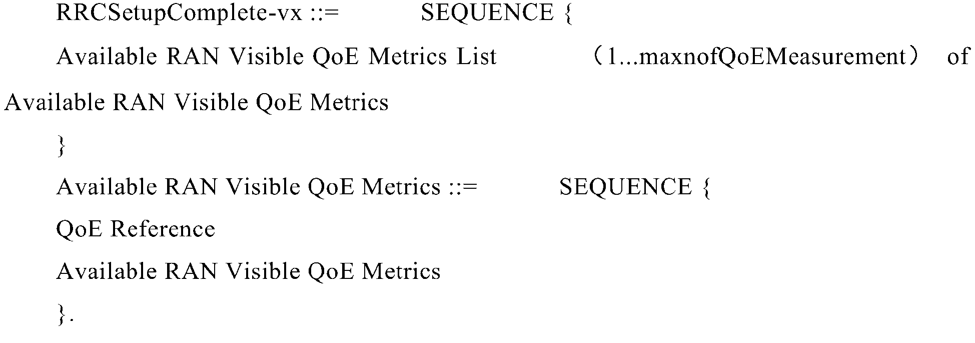

In this case, the first information may specifically be:

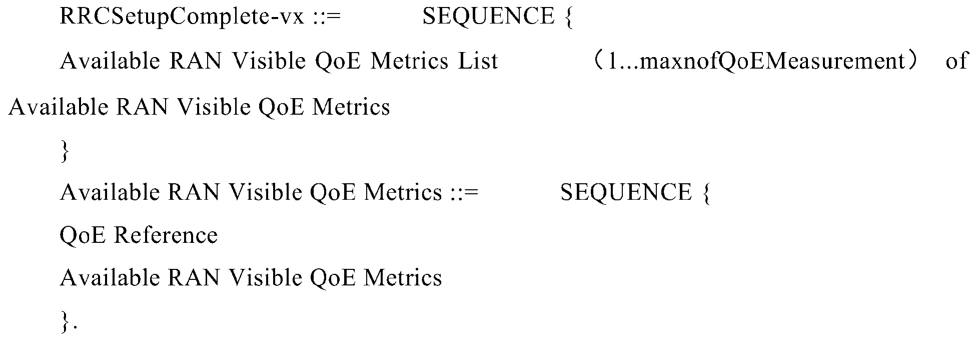

Optionally, the terminal device may transmit a connection setup complete message to the target access network device in the form of radio resource control signaling. Alternatively, the terminal device may also transmit the connection setup complete message to the target access network device via a physical uplink control channel (PUCCH). Alternatively, the terminal device may transmit the connection setup complete message to the target access network device through pre-configuration information of radio resource control signaling. Alternatively, the terminal device may also transmit the connection setup complete message to the target access network device via PUCCH activate information.

It can be understood that since the first information is carried in the connection setup complete message transmitted by the terminal device to the target access network device, when the terminal device switches to the target access network device, the terminal device may promptly transmit the QoE parameter set to the target access network device after the connection setup with the target access network device is completed. This enables the target access network device to generate the second QoE measurement configuration parameter based on the QoE parameter set, thereby performing QoE measurement configuration for the terminal device. This improves the efficiency of QoE measurement performed by the terminal device in an idle state after performing cell handover.

Additionally, since the first information in the present application is carried in the connection setup complete message transmitted by the terminal device to the target access network device, rather than the first information being transmitted separately by the terminal device to the target access network device. Therefore, the amount of information transmitted by the terminal device can be reduced, avoiding resource waste.

The second manner: the first information is carried in the first QoE measurement report.

Optionally, the first information is carried in a first QoE measurement report transmitted by the terminal device to the target access network device.

Here, the first QoE measurement report is generated by the terminal device by performing a QoE measurement based on the first QoE measurement configuration parameter information transmitted by the source access network device. The source access network device is an access network device to which the terminal device established a connection before performing cell reselection, and the first QoE measurement configuration parameter information is generated based on the QoE parameter set.

Optionally, the first QoE measurement configuration parameter information is generated by the source access network device based on the QoE parameter set.

In one possible implementation, the terminal device generates first radio resource control information based on the first QoE measurement report; and an AS of the terminal device transmits the first radio resource control information to the target access network device.

Optionally, the first radio resource control information may be an RRC Message transmitted by the AS of the terminal device to the target access network device.

As illustrated in Example 2, the specific message content of the first QoE measurement report carrying the first information may include:

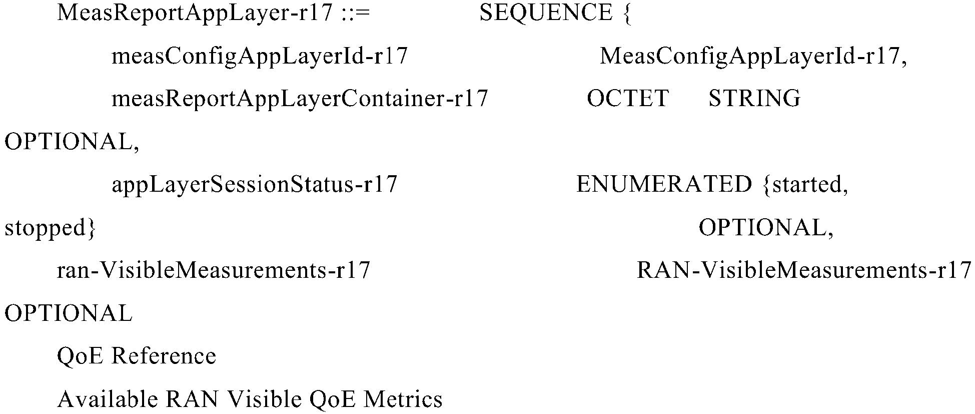

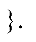

In this case, the first information may specifically be:
QoE Reference
Available RAN Visible QoE Metrics.

It can be understood that when the terminal device switches from the source access network device to the target access network device, the terminal device still has some first QoE measurement reports that have not been reported to the source access network device. At this time, the terminal device has already switched to the target access network device, and the terminal device may report the first QoE measurement report to the target access network device.

Since the first information in the present application is carried in the first QoE measurement report transmitted by the terminal device to the target access network device, based on this, when the terminal device reports the first QoE measurement report to the target access network device, the terminal device may transmit the QoE parameter set to the target access network device. In this way, the terminal device may promptly transmit the QoE parameter set to the target access network device after the connection setup with the target access network device is completed. This enables the target access network device to generate the second QoE measurement configuration parameter based on the QoE parameter set, thereby performing QoE measurement configuration for the terminal device. This improves the efficiency of QoE measurement performed by the terminal device in an idle state after performing cell handover.

Additionally, since the first information in the present application is carried in the first QoE measurement report transmitted by the terminal device to the target access network device, rather than the first information being transmitted separately by the terminal device to the target access network device. Therefore, the amount of information transmitted by the terminal device can be reduced, avoiding resource waste.

The above technical solution brings at least the following beneficial effects: in the present application, after a terminal device in an idle state re-establishes a connection with a target access network device, the terminal device transmits a QoE parameter set to the target access network device. Accordingly, the target access network device receives the QoE parameter set from the terminal device. In this way, the target access network device may obtain QoE parameters of the terminal device. Based on this, the target access network device may generate the QoE parameter for the terminal device based on the QoE parameter set, transmit these QoE parameters to the terminal device, thereby enabling the terminal device to perform QoE measurements according to the QoE parameters. This solves the problem in the prior art where a terminal device in an idle state cannot perform the QoE measurement after performing cell handover due to the absence of the QoE parameter of the terminal device in the target access network device (i.e., an access network device to which the terminal device in the idle state establishes a connection after performing cell reselection).

In one possible implementation, referring to FIG. 8 and as illustrated in FIG. 9, the aforementioned S801 of obtaining the QoE parameter set may be obtaining, by the terminal device, the QoE parameter set from the source access network device. The process of the terminal device obtaining the QoE parameter set from the source access network device can be specifically implemented through the following S901 to S902.

In S901, a source access network device obtains a QoE parameter set.

In one possible implementation, the source access network device receives activate QoE measurement information transmitted by a core network device. Here, the activate QoE measurement information includes the QoE parameter set.

It should be noted that the OAM device may determine a QoE measurement to be configured and a set of all or part of the parameters (i.e., the QoE parameter set) that can be used for optimization by the access network device. Based on an identifier of the QoE measurement to be configured and the QoE parameter set, the OAM device determines activate configuration information and transmits the activate configuration information to the source access network device. Accordingly, the source access network device receives the activate configuration information from the OAM device and generates second information based on the activate configuration information.

In S902, the source access network device transmits second information to a terminal device. Accordingly, the terminal device receives the second information from the source access network device.

Here, the source access network device is an access network device to which the terminal device established a connection before performing cell reselection. The second information includes the QoE parameter set.

Optionally, the second information further includes a target QoE reference identity, and the target QoE reference identity is used to mark a QoE to be measured in the terminal device.

It should be noted that the second information further includes the target QoE reference identity. The terminal device may obtain the target QoE reference identity from the second information and transmit the target QoE reference identity to a target access network device. After this, the target access network device generates second QoE measurement configuration information based on a second QoE measurement configuration parameter and transmits the second QoE measurement configuration information to the terminal device based on an identifier of the terminal device. Based on this, the target access network device may configure an appropriate second QoE measurement configuration parameter for the terminal device based on the needs of the terminal device.

Optionally, the second information transmitted by the source access network device to the terminal device may be carried in the following two manners. In the third manner, the second information is carried in first QoE measurement configuration parameter information; and in the fourth manner, the second information is carried in connection release information.

The following provides a detailed explanation of the third manner and the fourth manner.

The third manner: the second information is carried in the first QoE measurement configuration parameter information.

Optionally, the second information is carried in first QoE measurement configuration parameter information transmitted by the source access network device to the terminal device.

In one possible implementation, the source access network device generates second radio resource control information based on the first QoE measurement configuration parameter and transmits the second radio resource control information to an AS of the terminal device.

Optionally, the source access network device may transmit the second radio resource control information to the terminal device in the form of radio resource control signaling. Alternatively, the source access network device may also transmit the second radio resource control information to the terminal device via PDCCH. Alternatively, the source access network device may transmit the second radio resource control information to the terminal device via pre-configuration information of radio resource control signaling. Alternatively, the source access network device may also transmit the second radio resource control information to the terminal device via PDCCH activate information.

As illustrated in Example 3, the specific message content of the first QoE measurement configuration parameter information carrying the second information may include:

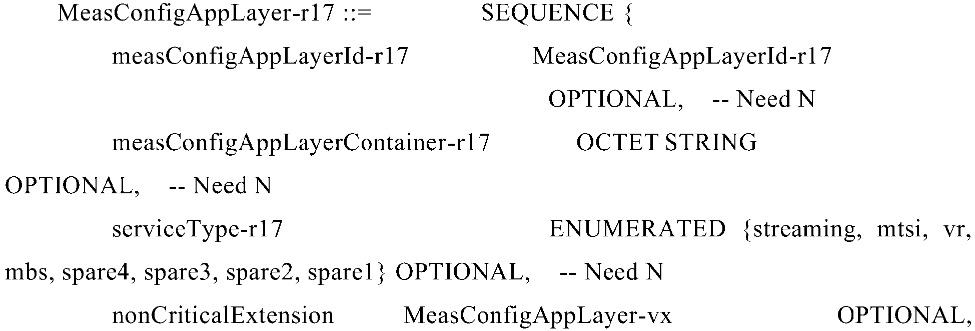

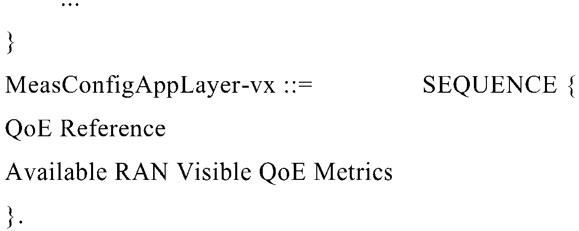

In this case, the second information can specifically be:

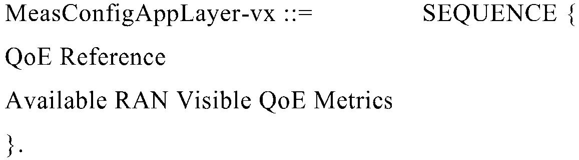

It should be noted that when the terminal device accesses the source access network device, the terminal device may receive information transmitted by the source access network device. Since the second information is carried in the first QoE measurement configuration parameter information transmitted by the source access network device to the terminal device, before the terminal device switches to the target access network device, the terminal device receives the second information containing the QoE parameter set and stores the QoE parameter set. When the terminal device switches to the target access network device, the terminal device can transmit the QoE parameter set to the target access network device. This enables the target access network device to generate the second QoE measurement configuration parameter based on the QoE parameter set, thereby performing QoE measurement configuration for the terminal device. This improves the efficiency of QoE measurement performed by the terminal device in an idle state after performing cell handover.

Additionally, since the second information in the present application is carried in the first QoE measurement configuration parameter information transmitted by the source access network device to the terminal device, rather than the second information being transmitted separately by the source access network device to the terminal device. Therefore, the amount of information transmitted by the source access network device can be reduced, avoiding resource waste.

In the fourth manner: the second information is carried in the connection release information.

Optionally, the second information is carried in connection release information transmitted by the source access network device to the terminal device.

Optionally, the connection release information is an RRC release message, i.e., UE Context Release.

As illustrated in Example 4, the specific message content of the connection release information carrying the second information may include:

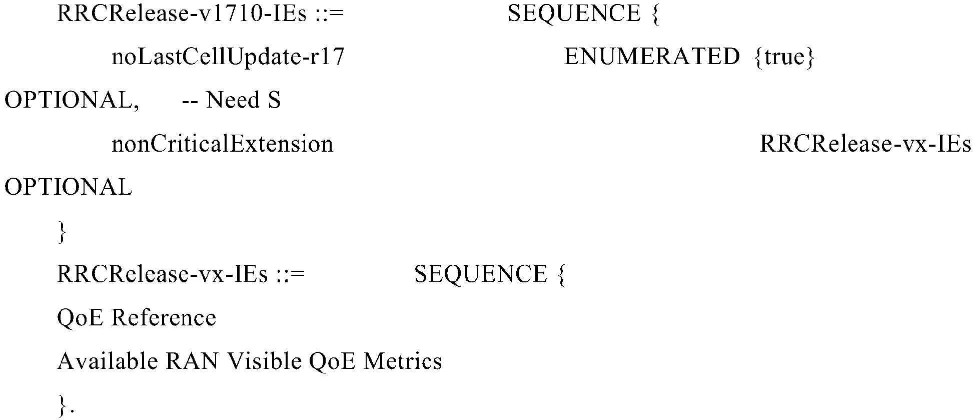

In this case, the second information can specifically be:

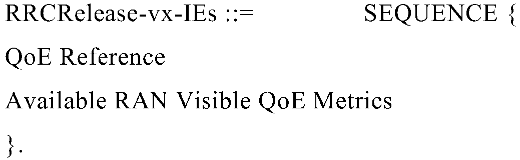

It should be noted that when performing cell handover, the terminal device transmits a cell handover request to the source access network device. Accordingly, the source access network device transmits connection release information to the terminal device. After receiving the connection release information, the terminal device disconnects from the source access network device and establishes a communication connection with the target access network device.

Since the second information is carried in the connection release information transmitted by the source access network device to the terminal device, the terminal device may receive the second information containing the QoE parameter set from the source access network device before establishing a communication connection with the target access network device. Based on this, the terminal device may promptly transmit the QoE parameter set to the target access network device after the connection setup with the target access network device is completed. This enables the target access network device to generate the second QoE measurement configuration parameter based on the QoE parameter set. This improves the efficiency of QoE measurement performed by the terminal device in an idle state after performing cell handover.

Additionally, since the second information in the present application is carried in the connection release information transmitted by the source access network device to the terminal device, rather than the second information being transmitted separately by the source access network device to the terminal device. Therefore, in the present application, the amount of information transmitted by the source access network device can be reduced, avoiding resource waste.

It should be noted that the terminal device can also obtain the QoE parameter set from other sources. For example. The terminal device can obtain the QoE parameter set from the AMF.

In one possible implementation, after receiving the second information from the source access network device, the terminal device saves the second information and obtains the QoE parameter set from the second information.

Optionally, the terminal device saves the second information before obtaining the QoE parameter set.

In one possible implementation, the terminal device stores the second information in its own storage module.

The above technical solution brings at least the following beneficial effects: in the present application, a source access network device transmits second information containing a QoE parameter set to a terminal device, enabling the terminal device to save the QoE parameter set. After the terminal device switches to a target access network device, this creates a condition for the terminal device to transmit the QoE parameter set to the target access network device.

Additionally, in the present application, the source access network device transmits the second information containing the QoE parameter set to the terminal device in two manners. Since the second information can be carried in the first QoE measurement configuration parameter information transmitted by the source access network device to the terminal device, and the second information can also be carried in the connection release information transmitted by the source access network device to the terminal device. Based on this, the time for the terminal device to receive the second information from the source access network device is reduced, avoiding resource waste caused by the source access network device transmitting the second information separately to the terminal device, and improving the efficiency of QoE measurement performed by the terminal device in an idle state after performing cell handover.

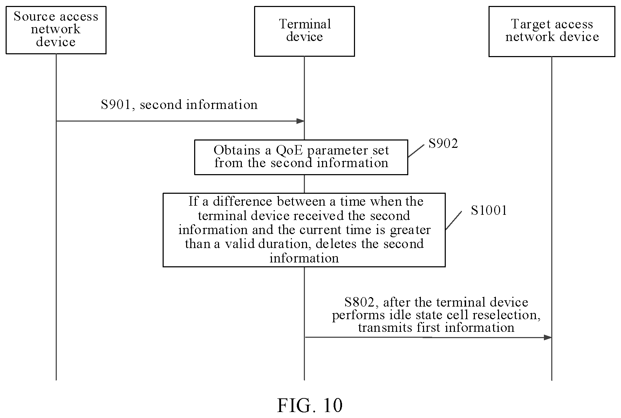

In one possible implementation, referring to FIG. 9 and as illustrated in FIG. 10, after the terminal device stores the second information in S902, the terminal device manages the second information. The process of the terminal device managing the second information may be specifically achieved through the following S1001.

In S1001, if a difference between a time when the terminal device received the second information and the current time is greater than a valid duration, the terminal device deletes the second information.

Optionally, the second information further includes the valid duration.

In one possible implementation, after receiving the second information transmitted by the source access network device, the terminal device records the time when it received the second information. The terminal device obtains the valid duration in the second information in real time. When the difference between the time when the terminal device received the second information and the current time is greater than the valid duration, the terminal device deletes the second information.

For example, after receiving the second information transmitted by the source access network device, the terminal device records the time when it received the second information as 14:30 on October 22, 2022. The valid duration in the second message is 72 hours. If the current time is 12:30 on October 24, 2022, the difference between the time when the terminal device received the second information and the current time is 46 hours. Since the difference between the time when the terminal device received the second information and the current time is 46 hours, which is less than the valid duration of 72 hours, the terminal device does not delete the second information. If the current time is 12:30 on October 27, 2022, the difference between the time when the terminal device received the second information and the current time is 118 hours. Since the difference between the time when the terminal device received the second information and the current time is 118 hours, which is greater than the valid duration of 72 hours, the terminal device deletes the second information.

In another possible implementation, after receiving the second information transmitted by the source access network device, the terminal device records the time when it received the second message. The terminal device obtains the valid duration of the second information, and determines a target time based on the valid duration of the second information and the time when the terminal device received the second information. If the current time is later than the target time, the terminal device deletes the second information.

For example, after receiving the second information transmitted by the source access network device, the terminal device records the time when it receives the second information as 14:30 on October 22, 2022. The valid duration in the second message is 72 hours, and the preset time is 14:30 on October 25, 2022. If the current time is 12:20 on October 24, 2022, the current time is earlier than the preset time, the terminal device does not delete the second information. If the current time is 12:20 on October 27, 2022, the current time is later than the preset time, the terminal device deletes the second information.

The above technical solution brings at least the following benefits: in the embodiments of the present application, if the difference between the time when the terminal device received the second information and the current time is less than or equal to the valid duration, the terminal device does not delete the second information. If the difference between the time when the terminal device received the second information and the current time is greater than the valid duration, the terminal device deletes the second information. In this way, the terminal device may delete the second information that occupies storage space for a long time, alleviating the pressure on a storage module of the terminal device and achieving precise management of the stored second information by the terminal device.

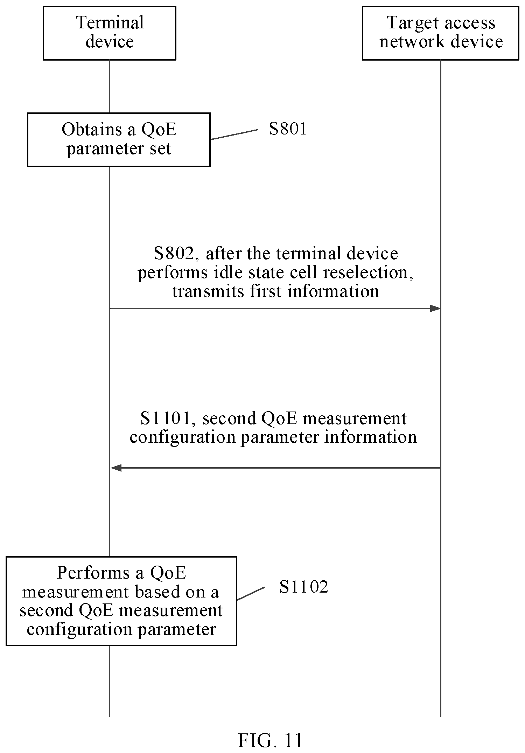

In one possible implementation, referring to FIG. 8 and as illustrated in FIG. 11, after the terminal device transmits the first information to the currently accessed target access network device in S802, the terminal device performs a QoE measurement based on a second QoE measurement configuration parameter. The process of the terminal device performing the QoE measurement based on the second QoE measurement configuration parameter may be specifically implemented through the following steps S1101 to S1102.

In S1101, the target access network device transmits second QoE measurement configuration parameter information to the terminal device.

The second QoE measurement configuration parameter information is obtained based on a QoE parameter set.

Optionally, the second QoE measurement configuration parameter information includes a second QoE measurement configuration parameter, which corresponds to a target QoE reference identity, among at least one QoE measurement configuration parameter in the QoE parameter set.

In S1102, the terminal device performs a QoE measurement based on the second QoE measurement configuration parameter.

Optionally, after receiving the second QoE measurement configuration parameter from the target access network device, the terminal device may perform the QoE measurement based on the second target QoE measurement configuration parameter and generate a second QoE measurement report. The second QoE measurement report may include: a measurement result of the second QoE measurement parameter and an identity of the second QoE measurement. The terminal device may transmit the second QoE measurement report to the target access network device. Correspondingly, the target access network device receives the second QoE measurement report from the terminal device. After receiving the QoE measurement report from the terminal device, the target access network device may perform network optimization on itself based on the second QoE measurement report.

The above technical solution brings at least the following benefits: in the embodiments of the present application, the target access network device determines the second QoE measurement configuration parameter for the terminal device from the QoE parameter set and transmits the second QoE measurement configuration parameter to the terminal device. This solves the problem in prior art where a terminal device in an idle state cannot perform the QoE measurement after performing cell handover due to the absence of the QoE parameter of the terminal device in the target access network device (i.e., an access network device to which the terminal device in the idle state establishes a connection after performing cell reselection).

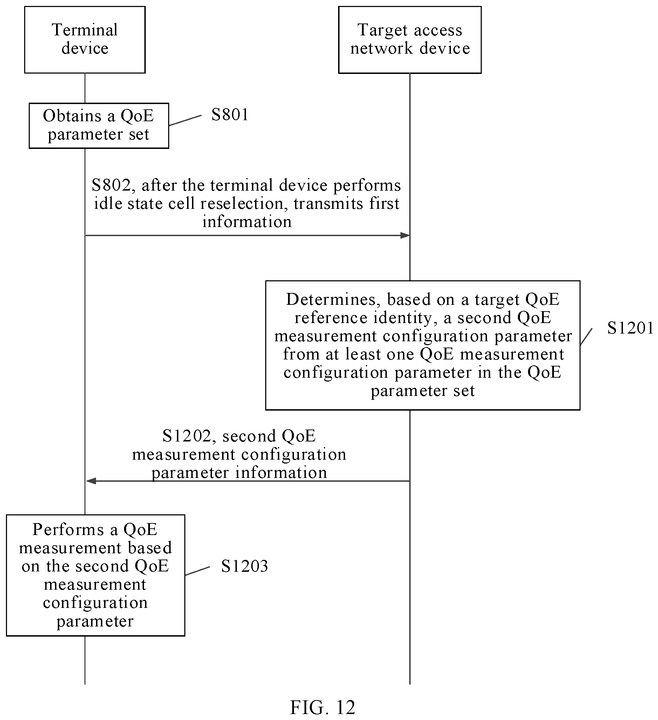

In one possible implementation, referring to FIG. 11 and as illustrated in FIG. 12, the process of the terminal device performing the QoE measurement based on the second QoE measurement configuration parameter in S1102 may be specifically implemented through the following S1201 to1203.

In S1201, the target access network device determines, based on the target QoE reference identity, the second QoE measurement configuration parameter from at least one QoE measurement configuration parameter in the QoE parameter set.

The second QoE measurement configuration parameter is carried in the second QoE measurement configuration parameter information.

Optionally, the first information further includes a target QoE reference identity, which is used to mark a QoE measurement to be performed in the terminal device.

Optionally, the target access network device is an access network device that the terminal device currently accessed.

In one possible implementation, the target access network device parses first information to obtain the target QoE reference identity, and determines, based on the target QoE reference identity, the second QoE measurement configuration parameter from at least one QoE measurement configuration parameter in the QoE parameter set.

As an optional implementation, the specific process of S1201 may be that: the target access network device obtains all or part of performance parameters of the target access network device from a network management device side, and determines the poorer performance parameter from these performance parameters. The target access network device determines a parameter in the QoE parameter set that is the same as the poorer performance parameter as the second QoE measurement parameter.

Optionally, the target access network device may further refer to a service type of the QoE measurement when determining the second QoE measurement parameter. For example, in a case where the service type of the QoE measurement is a video service, the target access network device may select a parameter related to the video service (e.g., stall count) from the QoE parameter set, so that the QoE measurement can be better adapt to the requirement of the services.

In one example, the second QoE measurement parameter may include at least one of the following: a packet loss rate, a drop rate, or an access success rate. This is only an exemplary description of the second QoE measurement parameter, the second QoE measurement parameter may further include other parameters (e.g., delay), which is not limited in the present application.

It should be noted that, the second QoE measurement configuration parameter is determined by the target access network device based on the QoE parameter set; the first QoE measurement configuration parameter is determined by the source access network device based on the QoE parameter set. The second QoE measurement configuration parameter may be the same as or different from the first QoE measurement configuration parameter, which is not limited here.

Optionally, the target access network device generates the second QoE measurement configuration parameter information based on the second QoE measurement configuration parameter. The second QoE measurement configuration parameter information includes the second QoE measurement configuration parameter.

Optionally, the target access network device is an access network device that the terminal device currently accessed.

In S1202, the target access network device transmits the second QoE measurement configuration parameter information to the terminal device.

Correspondingly, the terminal device receives the second QoE measurement configuration parameter information from the target access network device.

In one possible implementation, the target access network device transmits third radio resource control information to an AS layer of the terminal device, where the third radio resource control information includes the second QoE measurement configuration parameter.

Optionally, the target access network device may transmit the third radio resource control information to the terminal device in a form of radio resource control signaling; or, the target access network device may further transmit the third radio resource control information to the terminal device via a PDCCH; or, the target access network device may transmit the third radio resource control information to the terminal device via radio resource control signaling pre-configuration information; or, the target access network device may further transmit the third radio resource control information to the terminal device via PDCCH activation information.

In one possible implementation, the third radio resource control information may be an RRC Message transmitted by the target access network device to the access layer of the terminal device.

In S1203, the terminal device performs the QoE measurement based on the second QoE measurement configuration parameter.

The above technical solution brings at least the following benefits: in the embodiments of the present application, when a terminal device in an idle state performs cell handover, it transmits first information containing the target QoE measurement identity to the target access network device, and the target access network device determines, based on the target QoE reference identity, the second QoE measurement configuration parameter of the terminal device from the QoE parameter set, so that the accuracy of the target access network device configuring the QoE measurement configuration parameter for the terminal device is improved. Furthermore, the target access network device transmits the second QoE measurement configuration parameter to the terminal device, addressing the problem in the prior art where a terminal device in an idle state cannot perform the QoE measurement after performing cell handover due to the absence of the QoE parameter of terminal device in the target access network device (i.e., an access network device to which the terminal device in the idle state establishes a connection after performing cell reselection).

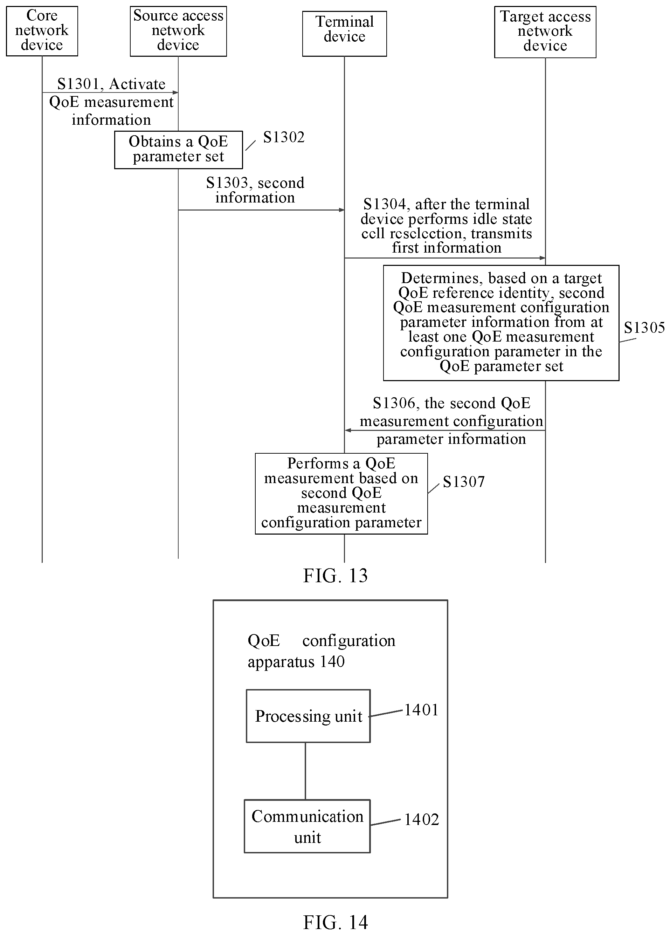

In one possible implementation, referring to FIG. 9 and as illustrated in FIG. 13, before the source access network device transmits the second information to the terminal device in S901, the source access network device obtains a QoE parameter set. The process of the source access network device obtaining the QoE parameter set may be specifically implemented through the following steps S1301 to S1307.

In S1301, the source access network device receives activate QoE measurement information transmitted by a core network device.

The QoE measurement information includes a QoE parameter set.

In S1302, the source access network device obtains the QoE parameter set.

The specific implementation of S1301 may refer to S901 above, which will not be repeated here.

In S1303, the source access network device transmits second information to the terminal device. Correspondingly, the terminal device receives the second information from the source access network device.

The specific implementation of S1302 may refer to S902 above, which will not be repeated here.

In S1304, after the terminal device performs idle state cell reselection, the terminal device transmits the first information to a currently accessed target access network device.

The specific implementation of S1304 may refer to S802 above, which will not be repeated here.

In S1305, the target access network device determines, based on the target QoE reference identity, the second QoE measurement configuration parameter information from at least one QoE measurement configuration parameter in the QoE parameter set.

The specific implementation of S1305 may refer to S1201 above, which will not be repeated here.

In S1306, the target access network device transmits the second QoE measurement configuration parameter information to the terminal device.

The specific implementation of S1306 may refer to S1202 above, which will not be repeated here.

In S1307, the terminal device performs the QoE measurement according to the second QoE measurement configuration parameter.

The specific implementation of S1307 may refer to S1203 above, which will not be repeated here.

The above technical solution brings at least the following benefits: in the present application, after the terminal device in an idle state re-establishes a connection with the target access network device, the terminal device transmits the QoE parameter set to the target access network device. Correspondingly, the target access network device receives the QoE parameter set from the terminal device. In this way, the target access network device may obtain the QoE parameters of the terminal device. Based on this, the target access network device may generate the QoE parameter of the terminal device based on the QoE parameter set, and transmit the QoE parameter to the terminal device, thereby enabling the terminal device to perform the QoE measurement according to the QoE parameter. This solves the problem in the prior art where a terminal device in an idle state cannot perform the QoE measurement after performing cell handover due to the absence of the QoE parameter of the terminal device in the target access network device (i.e., an access network device to which the terminal device in the idle state establishes a connection after performing cell reselection).

It can be seen that the above mainly introduces the technical solutions provided by the embodiments of the present application from the perspective of methods. To achieve the above functions, it includes corresponding hardware structures and/or software modules for executing each function. Those skilled in the art should easily realize that the modules and algorithm steps of respective examples described in the embodiments disclosed herein can be implemented in hardware or a combination of hardware and computer software. Whether a specific function is executed by hardware or computer software-driven hardware depends on the specific application and design constraints of the technical solution. Professionals can use different methods for each specific application to implement the described functions, but such implementation should not be considered beyond the scope of the present invention.

In the embodiments of the present application, the functional modules of a QoE configuration apparatus may be divided according to the above method examples. For example, each function may correspond to a separate functional module, or two or more functions may be integrated into one processing module. The aforementioned integrated modules may be implemented either in hardware form or as software functional modules. Optionally, the division of modules in the embodiments of the present application is illustrative and merely represents a logical functional division. In actual implementations, other division manners may be used.

As illustrated in FIG. 14, this is a schematic structural diagram of a QoE configuration apparatus 140 provided in an embodiment of the present application. The QoE configuration apparatus 140 includes: a processing unit 1401 and a communication unit 1402.

The processing unit 1401 is configured to obtain a QoE parameter set; and the processing unit 1401 is further configured to: after a terminal device performs idle state cell reselection, instruct the communication unit 1402 to transmit first information to a currently accessed target access network device, where the first information includes the QoE parameter set.

Optionally, the first information is carried in a connection setup complete message.

Optionally, the first information is carried in a first QoE measurement report, where the first QoE measurement report is a report generated by the terminal device by performing a QoE measurement based on first QoE measurement configuration parameter information transmitted by a source access network device, the source access network device being an access network device to which the terminal device established a connection before performing cell reselection, and the first QoE measurement configuration parameter information being generated based on the QoE parameter set.

Optionally, the communication unit 1402 is further configured to receive second information from the source access network device, where the source access network device is an access network device to which the terminal device established a connection before performing cell reselection; and the second information includes the QoE parameter set.

Optionally, the second information is carried in the first QoE measurement configuration parameter information.

Optionally, the second information is carried in connection release information.

Optionally, both the first information and the second information further include a target QoE reference identity, and the target QoE reference identity is used to mark a QoE measurement to be performed in the terminal device.

Optionally, the communication unit 1402 is further configured to receive second QoE measurement configuration parameter information from the target access network device, where the second QoE measurement configuration parameter information includes a second QoE measurement configuration parameter; and the processing unit 1401 is further configured to perform a QoE measurement based on the second QoE measurement configuration parameter.

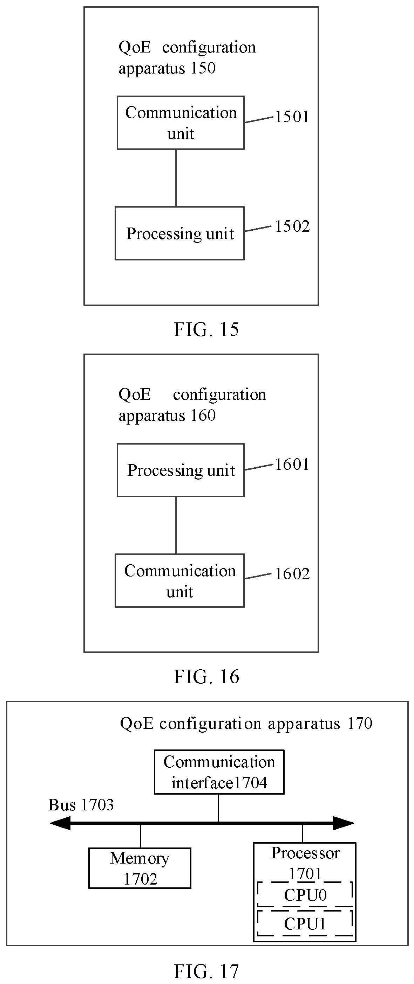

As illustrated in FIG. 15, this is a schematic structural diagram of a QoE configuration apparatus 150 provided in an embodiment of the present application. The QoE configuration apparatus 150 includes: a communication unit 1501 and a processing unit 1502.

The communication unit 1501 is configured for a target access network device to receive first information from a terminal device, where the first information includes a QoE parameter set; and the processing unit is configured to instruct the communication unit to transmit second QoE measurement configuration parameter information to the terminal device, where the second QoE measurement configuration parameter information is obtained based on the QoE parameter set.

Optionally, the first information is carried in a connection setup complete message.

Optionally, the first information is carried in a first QoE measurement report, where the first QoE measurement report is generated by performing a QoE measurement based on first QoE measurement configuration parameter information transmitted by a source access network device, the source access network device being an access network device to which the terminal device established a connection before performing cell reselection, and the first QoE measurement configuration parameter information being information generated by the target access network device based on the QoE parameter set.

Optionally, the first information further includes a target QoE reference identity, where the target QoE reference identity is used to mark a QoE measurement to be performed in the terminal device.

Optionally, the second QoE measurement configuration parameter information includes a second QoE measurement configuration parameter, where the second QoE measurement configuration parameter is a QoE measurement configuration parameter corresponding to the target QoE reference identity, among at least one QoE measurement configuration parameter in the QoE parameter set.

As illustrated in FIG. 16, this is a schematic structural diagram of a QoE configuration apparatus 160 provided in an embodiment of the present application. The QoE configuration apparatus 160 includes: a processing unit 1601 and a communication unit 1602.

The processing unit 1601 is configured to obtain a QoE parameter set; and the communication unit 1602 is configured to transmit second information to a terminal device, where the second information includes the QoE parameter set.

Optionally, the second information is carried in first QoE measurement configuration parameter information.

Optionally, the second information is carried in connection release information.

In a case where the functions of the above integrated modules are implemented in a form of hardware, the embodiments of the present application provide a possible schematic structural diagram of the QoE configuration apparatus (e.g., a terminal device or an access network device) involved in the above embodiments. As illustrated in FIG. 17, the QoE configuration apparatus 170 includes: a processor 1701, a memory 1702, a bus 1703 and a communication interface 1704. The processor 1701 and the memory 1702 may be connected via the bus 1703.

The processor 1701 is the control center of a communication apparatus and may be a single processor or a collective term for multiple processing elements. For example, the processor 1701 may be a general-purpose central processing unit (CPU) or other general-purpose processors. Here, the general-purpose processor may be a microprocessor or any conventional processor, etc.

In an embodiment, the processor 1701 may include one or more CPUs, e.g., a CPU 0 and a CPU 1 illustrated in FIG. 17.

The memory 1702 may be, but is not limited to: a read-only memory (ROM) or other types of static storage devices that are capable of storing static information and instructions; a random access memory (RAM) or other types of dynamic storage devices that are capable of storing information and instructions; or an electrically erasable programmable read-only memory (EEPROM), a magnetic disk storage medium or other magnetic storage devices; or any other medium capable of carrying or storing desired program code in the form of instructions or data structures and accessible by a computer.

In a possible implementation, the memory 1702 may exist separately from the processor 1701, and the memory 1702 may be connected to the processor 1701 via the bus 1703 to store instructions or program code. The processor 1701, when calling and executing the instructions or program code stored in the memory 1702, can implement the sensor determination method provided in the embodiments of this application.

In another possible implementation, the memory 1702 may also be integrated with the processor 1701.

The bus 1703 may be an industry standard architecture (ISA) bus, a peripheral component interconnect (PCI) bus, or an extended industry standard architecture (EISA) bus, etc. The bus may be categorized into an address bus, a data bus, and a control bus, etc. For ease of representation, the bus is represented by a single thick line in FIG. 17, but this does not imply there is only one bus or one type of bus.

The communication interface 1704 is configured to connect with other devices via a communication network. The communication network may be Ethernet, a wireless access network, or a wireless local area network (WLAN), etc. The communication interface 1704 may include a receiving unit for receiving data and a transmitting unit for transmitting data.

It should be noted that the structure illustrated in FIG. 17 does not constitute a limitation on the QoE configuration apparatus 170. In addition to the components illustrated in FIG. 17, the QoE configuration apparatus 170 may include more or fewer components than those illustrated in the figure, or combine certain components, or have different component arrangements.

In a design, in the QoE configuration apparatus 170 provided in the embodiments of the present application, the communication interface may also be integrated into the processor.

In another hardware structure of the QoE configuration apparatus provided in the embodiments of the present application, the QoE configuration apparatus may include a processor and a communication interface. The processor is coupled to the communication interface.

The function of the processor may be referenced to the above description for the processor. In addition, the processor also has a storage function, which can be referenced to the above description for the memory.

The communication interface is configured to provide data to the processor. The communication interface may be an internal interface of the communication apparatus or an external interface of the communication apparatus.

It should be noted that the above alternative hardware structure does not constitute a limitation on the QoE configuration apparatus. In addition to the components of the alternative hardware structure, the QoE configuration apparatus may include more or fewer components, or combine certain components, or have different component arrangements.

When implementing the above functions of the integrated modules in the form of hardware, a structural diagram of a middleware involved in the above embodiments provided in the embodiments of the present application may be referenced to the structural diagram of the above executor.

When implementing the above functions of the integrated modules in the form of hardware, a structural diagram of the access network device involved in the above embodiments provided in the embodiments of the present application may be referenced to the description for the QoE configuration apparatus 170, which will not be repeated here.

Through the description of the above implementations, those skilled in the art can clearly understand that for the convenience and brevity of description, only the division of the above functional modules is used as an example for description. In practical applications, the above functions may be allocated to different functional modules as needed, that is, the internal structure of the apparatus may be divided into different functional modules to complete all or part of the functions described above. For the specific operating processes of the systems, apparatuses and units described above, reference may be made to the corresponding processes in the aforementioned method embodiments, which will not be repeated here.

The computer-readable storage medium may include, but is not limited to: an electrical, magnetic, optical, electromagnetic, infrared or semiconductor system, apparatus or device, or any combination of the above. More specific examples of the computer-readable storage medium (a non-exhaustive list) include: an electrical connection with one or more wires, a portable computer disk, a hard disk, a random access memory (RAM), a read-only memory (ROM), an erasable programmable read-only memory (EPROM), a register, a hard disk, an optical fiber, a portable compact disk read-only memory (CD-ROM), an optical storage device, a magnetic storage device, or any suitable combination of the above, or any other form of computer-readable storage medium well-known in the field. An exemplary storage medium is coupled to a processor, so that the processor is enabled to read information from and write information to the storage medium. Certainly, the storage medium may also be an integral part of the processor. The processor and the storage medium may be located in an application specific integrated circuit (ASIC). In the embodiments of the present application, the computer-readable storage medium may be any tangible medium that contains or stores a program, and the program may be used by an instruction execution system, apparatus or device; or the program may be used in combination with the instruction execution system, apparatus or device.

Since the apparatus, device, computer-readable storage medium and computer program product in the embodiments of the invention may be applied to the above methods, the technical effects they can achieve may also be referenced to the above method embodiments, which will not be repeated here in the embodiments of the present application. The above descriptions are merely specific implementations of the present application, but the protection scope of the present application is not limited thereto. Any changes or substitutions within the technical scope disclosed in the present application shall be covered by the protection scope of the present application. Therefore, the protection scope of the present application shall be subject to the protection scope of the claims.

## Claims

1. A quality of experience (QoE) configuration method, applied to a terminal device and comprising:
obtaining a QoE parameter set; and
after the terminal device performs idle state cell reselection, transmitting first information to a currently accessed target access network device, wherein the first information comprises the QoE parameter set.

2. The method according to claim 1, wherein the first information is carried in a connection setup complete message.

3. The method according to claim 1, wherein the first information is carried in a first QoE measurement report, wherein the first QoE measurement report is a report generated by the terminal device by performing a QoE measurement based on first QoE measurement configuration parameter information transmitted by a source access network device, the source access network device is an access network device to which the terminal device established a connection before performing cell reselection, and the first QoE measurement configuration parameter information is generated based on the QoE parameter set.

4. The method according to any one of claims 1 to 3, wherein the obtaining the QoE parameter set comprises:
receiving second information from a source access network device, wherein the source access network device is an access network device to which the terminal device established a connection before performing cell reselection; and the second information comprises the QoE parameter set.

5. The method according to claim 4, wherein the second information is carried in first QoE measurement configuration parameter information.

6. The method according to claim 4, wherein the second information is carried in connection release information.

7. The method according to claim 4, wherein both the first information and the second information further comprise a target QoE reference identity, and the target QoE reference identity is used to mark a QoE measurement to be performed in the terminal device.

8. The method according to any one of claims 1 to 3, further comprising:
receiving second QoE measurement configuration parameter information from the target access network device, wherein the second QoE measurement configuration parameter information comprises a second QoE measurement configuration parameter; and
performing a QoE measurement based on the second QoE measurement configuration parameter.

9. A quality of experience (QoE) configuration method, applied to a target access network device and comprising:
receiving first information from a terminal device, wherein the first information comprises a QoE parameter set; and
transmitting second QoE measurement configuration parameter information to the terminal device, wherein the second QoE measurement configuration parameter information is obtained based on the QoE parameter set.

10. The method according to claim 9, wherein the first information is carried in a connection setup complete message.

11. The method according to claim 9, wherein the first information is carried in a first QoE measurement report, wherein the first QoE measurement report is generated by performing a QoE measurement based on first QoE measurement configuration parameter information transmitted by a source access network device, the source access network device is an access network device to which the terminal device established a connection before performing cell reselection, and the first QoE measurement configuration parameter information is information generated by the target access network device based on the QoE parameter set.

12. The method according to any one of claims 9 to 11, wherein the first information further comprises a target QoE reference identity, wherein the target QoE reference identity is used to mark a QoE measurement to be performed in the terminal device.

13. The method according to claim 12, wherein
the second QoE measurement configuration parameter information comprises a second QoE measurement configuration parameter, wherein the second QoE measurement configuration parameter is a QoE measurement configuration parameter corresponding to the target QoE reference identity, among at least one QoE measurement configuration parameter in the QoE parameter set.

14. A quality of experience (QoE) configuration method, applied to a source access network device and comprising:
obtaining a QoE parameter set; and
transmitting second information to a terminal device, wherein the second information comprises the QoE parameter set.

15. The method according to claim 14, wherein the second information is carried in first QoE measurement configuration parameter information.

16. The method according to claim 14, wherein the second information is carried in connection release information.

17. A quality of experience (QoE) configuration apparatus, comprising a processing unit and a communication unit, wherein
the processing unit is configured to obtain a QoE parameter set; and
the processing unit is further configured to: after a terminal device performs idle state cell reselection, instruct the communication unit to transmit first information to a currently accessed target access network device, wherein the first information comprises the QoE parameter set.

18. A quality of experience (QoE) configuration apparatus, comprising a communication unit and a processing unit, wherein
the communication unit is configured to receive first information from a terminal device, wherein the first information comprises a QoE parameter set; and
the processing unit is configured to instruct the communication unit to transmit second QoE measurement configuration parameter information to the terminal device, wherein the second QoE measurement configuration parameter information is obtained based on the QoE parameter set.

19. A quality of experience (QoE) configuration apparatus, comprising a processing unit and a communication unit, wherein
the processing unit is configured to obtain a QoE parameter set; and
the communication unit is configured to transmit second information to a terminal device, wherein the second information comprises the QoE parameter set.

20. A quality of experience (QoE) configuration apparatus, comprising: a processor and a memory, wherein the memory is configured to store computer-executable instructions, and when the QoE configuration apparatus is running, the processor executes the computer-executable instructions stored in the memory, to cause the QoE configuration apparatus to perform the QoE configuration method according to any one of claims 1 to 16.

21. A computer-readable storage medium, comprising instructions that, when executed on a computer, cause the computer to perform the QoE configuration method according to any one of claims 1 to 16.
